# EUROPEAN PATENT APPLICATION

(11) **EP 4 207 626 A2**
(43) Date of publication of application: **05.07.2023**
(21) Application number: 22215582.2
(22) Date of filing: 21.12.2022
(51) Int. Cl.: H04B 7/06, H01Q 1/24, H01Q 1/36

(54) **BEAMFORMING ANTENNAS THAT SHARE RADIO PORTS ACROSS MULTIPLE COLUMNS**

(30) Priority: 04.01.2022 US 202217567934
(71) Applicant: CommScope Technologies LLC, Hickory, NC 28602 (US)
(72) Inventor: WEN, Hangsheng, Suzhou, 215021 (CN); JUNTTILA, Mikko Juhani, 90220 Oulu (FI)
(74) Representative: Meissner Bolte Partnerschaft mbB

(57) **Abstract**

Antenna systems are provided. An antenna system includes a beamforming array having a plurality of vertical columns of radiating elements that are each configured to transmit at least three antenna beams per polarization. Moreover, the antenna system includes a beamforming radio having a plurality of radio frequency ports per polarization that are coupled to and fewer than the vertical columns.

## Description

### CROSS-REFERENCE TO RELATED APPLICATIONS

The present application is a continuation-in-part of U.S. Patent Application Serial No. 17/149,187, filed on January 14, 2021, which itself claims priority to PCT Application No. PCT/CN2020/111926, filed August 27, 2020, the entire content of which is incorporated herein by reference.

### BACKGROUND

The present invention generally relates to radio communications and, more particularly, to beamforming base station antennas for cellular communications systems.

Cellular communications systems are well known in the art. In a cellular communications system, a geographic area is divided into a series of regions or "cells" that are served by respective base stations. Each base station may include one or more base station antennas that are configured to provide two-way radio frequency ("RF") communications with subscribers that are within the cell served by the base station. In many cases, each base station is divided into "sectors." In one common configuration, a hexagonally-shaped cell is divided into three 120° sectors in the azimuth plane, and each sector is served by one or more base station antennas that have an azimuth Half Power Beamwidth ("HPBW") of approximately 65°. Typically, the base station antennas are mounted on a tower or other raised structure, with the radiation patterns that are generated by the base station antennas directed outwardly. Base station antennas are often implemented as linear or planar phased arrays of radiating elements.

In order to increase capacity, base station antennas that include beamforming arrays and/or that are configured to operate with multi-input-multi-output ("MIMO") radios have been introduced in recent years. A beamforming array refers to an antenna array that includes multiple columns of radiating elements. Beamforming arrays can generate antenna beams having reduced (narrower) beamwidths in, for example, the horizontal or "azimuth" plane, which increases the directivity or "gain" of the antenna, thereby increasing the supportable throughput. MIMO refers to a communication technique in which a data stream is broken into pieces that are simultaneously transmitted using certain coding techniques over multiple relatively uncorrelated transmission paths between a transmitting station and a receiving station. Multi-column antenna arrays may be used for MIMO transmissions, where each column in the array may be connected to a port of a MIMO radio and used to transmit/receive one of the multiple data streams. In practice, since orthogonal polarizations tend to be highly uncorrelated, the radiating elements in a MIMO array are typically implemented as dual-polarized radiating elements, allowing each column in the MIMO array to be connected to two ports on the radio (where the first port is connected to the first polarization radiators of the radiating elements in the column, and the second port connected to the second polarization radiators of the radiating elements in the column). This technique can effectively halve the number of columns of radiating elements required, since each physical column of the array contains two independent columns of radiators.

MIMO and beamforming techniques can also be combined. For example, so-called 8-Transmit/8-Receive ("8T8R") radios (which include eight radio ports) are now routinely connected to antenna arrays that include four columns of dual-polarized radiating elements that are configured to form a single antenna beam per polarization within a sector. The two polarizations may be used to implement 2xMIMO communications for each antenna beam. These beamforming antennas are typically used for time division duplex ("TDD") communications and may generate a single antenna beam during each individual time slot of the TDD communication scheme. Likewise, 16-Transmit/16-Receive ("16T16R") radios (which include sixteen radio ports) are known in the art that are connected to antenna arrays that include eight columns of dual-polarized radiating elements that are configured to form a single antenna beam at a time within a sector. The 16T16R solutions provide higher gain and less interference (and hence support higher data throughput) as compared to the 8T8R solution, but also require a larger array on the antenna and a much more expensive 16T16R radio, which can significantly increase cost.

### SUMMARY

Pursuant to embodiments of the present invention, an antenna system may include a beamforming radio having a plurality of first polarization signal sources and a plurality of first polarization radio signal ports, where each first polarization signal source is coupled to all of the first polarization radio signal ports. The antenna system may include an antenna array having a plurality of columns of radiating elements. Moreover, the antenna system may include a coupling circuit that includes a coupler and/or splitter that connects one of the first polarization radio signal ports to at least two of the columns of radiating elements. For example, the splitter may be an RF power divider that connects the one of the first polarization radio signal ports to the at least two of the columns of radiating elements.

In some embodiments, a total number of the first polarization signal sources may be equal to a total number of the first polarization radio signal ports. Moreover, the coupling circuit may include another coupler and/or splitter that connects the one of the first polarization radio signal ports to at least two rows of the radiating elements.

According to some embodiments, the beamforming radio may include a total of X first polarization radio signal ports and the antenna array may include a total of Y columns of radiating elements, where X and Y are positive integers and Y is greater than X. For example, Y may be equal to 2*X. Moreover, a total number of couplers and/or splitters included in the coupling circuit that connect the first polarization radio signal ports to the columns of radiating elements in the antenna array may be equal to Y - X, and the coupler and/or splitter may connect the one of the first polarization radio signal ports to fewer than all of the columns of radiating elements.

In some embodiments, each first polarization signal source may be coupled to all of the columns of radiating elements. Moreover, the splitters may be RF power dividers that couple the Z first polarization antenna signal ports to the Y columns of radiating elements.

According to some embodiments, the coupling circuit may include a plurality of couplers and/or splitters that connect the first polarization radio signal ports to the columns of radiating elements in the antenna array. Moreover, the antenna system may include a plurality of first polarization antenna signal ports and a Butler Matrix beamforming network that is connected between the first polarization antenna signal ports and the coupling circuit.

Each coupler and/or splitter in the coupling circuit may, in some embodiments, only be coupled to two of the columns of radiating elements. Moreover, each coupler in the coupling circuit may be a four-port coupler having an input port that is coupled to a respective one of the first polarization radio signal ports, first and second output ports that are coupled to respective ones of the columns of radiating elements, and an isolation port that is coupled to a resistive termination.

In some embodiments, a hook balun of a radiating element in a first of the columns is flipped as compared to a hook balun of a radiating element in a second of the columns.

An antenna system, according to embodiments of the present invention, may include a beamforming radio having W first polarization signal sources and X first polarization radio signal ports, where W and X are positive integers, and where each first polarization signal source is coupled to all X of the first polarization radio signal ports. The antenna system may include an antenna including: an antenna array having Y columns of radiating elements, where Y is a positive integer that is greater than X; and Z first polarization antenna signal ports that are coupled to the antenna array, where Z is a positive integer. Moreover, the antenna system may include a coupling circuit that includes a plurality of couplers and/or splitters, the coupling circuit coupling the Z first polarization antenna signal ports to the Y columns of radiating elements.

In some embodiments, a total number of couplers and/or splitters included in the coupling circuit that couple the Z first polarization antenna signal ports to the Y columns of radiating elements in the antenna array may be equal to Y - Z.

According to some embodiments, each first polarization signal source may be coupled to all Y columns of radiating elements.

In some embodiments, each coupler and/or splitter in the coupling circuit may only be coupled to two of the columns of radiating elements.

According to some embodiments, each coupler in the coupling circuit may be a four-port coupler having an input port that is coupled to a respective one of the first polarization radio signal ports, first and second output ports that are coupled to respective ones of the columns of radiating elements, and an isolation port that is coupled to a resistive termination.

In some embodiments, W may be equal to X.

According to some embodiments, Z may be less than Y.

In some embodiments, the antenna system may include a Butler Matrix beamforming network that is connected between the Z first polarization antenna signal ports and the coupling circuit.

A base station antenna system, according to embodiments of the present invention, may include a beamforming array having a plurality of vertical columns of radiating elements that are each configured to transmit at least three antenna beams per polarization. Moreover, the base station antenna system may include a beamforming radio having a plurality of radio signal ports per polarization that are coupled to and fewer than the vertical columns. For example, the vertical columns may include at least five vertical columns, and the radio signal ports may include no more than eight radio signal ports that are coupled to the at least five vertical columns. In another example, the vertical columns may include at least five vertical columns, and the radio signal ports may include no more than six radio signal ports that are coupled to the at least five vertical columns. As a further example, the vertical columns may include at least six vertical columns, and the radio signal ports may include no more than ten radio signal ports that are coupled to the at least six vertical columns.

In some embodiments, the no more than ten radio signal ports of the beamforming radio may include no more than five radio signal ports per polarization that are coupled to the at least six vertical columns. Moreover, the beamforming radio may include a plurality of RF signal sources per polarization that are each coupled to all of the no more than five radio signal ports.

According to some embodiments, the base station antenna system may include analog RF circuitry that is coupled between the beamforming radio and two of the vertical columns.

In some embodiments, the analog RF circuitry may include an RF coupler and/or splitter. Also, the two vertical columns may be non-adjacent vertical columns, and RF outputs of the RF coupler and/or splitter may be coupled only to the non-adjacent vertical columns. Moreover, a first output of the RF coupler and/or splitter may be fed to a first of the vertical columns with a first phase, and a second output of the RF coupler and/or splitter may be fed to a second of the vertical columns with a second phase that is offset by 180 degrees from the first phase.

According to some embodiments, the beamforming array may be part of a base station antenna that includes a plurality of antenna signal ports. The base station antenna system may further include analog RF circuitry that is coupled between the beamforming radio and a pair of the vertical columns. The analog RF circuitry may be configured to couple an RF signal received at a first of the antenna signal ports to at least two of the vertical columns. For example, the analog RF circuitry may be inside the base station antenna. As another example, the analog RF circuitry may be external to the base station antenna.

In some embodiments, the analog RF circuitry may include an RF coupler and/or splitter that splits an RF signal input to the RF coupler and/or splitter from the first of the antenna signal ports into first and second sub-components. A first output of the RF coupler and/or splitter may be fed to a first of the vertical columns with a first phase, and a second output of the RF coupler and/or splitter may be fed to a second of the vertical columns with a second phase that is offset by 180 degrees from the first phase.

According to some embodiments, the beamforming radio may include at least four RF signal sources per polarization. Each of the at least four RF signal sources may be configured to generate a respective RF component of each of the at least three antenna beams. Moreover, the beamforming radio may be configured to control each of the at least four RF signal sources to individually turn on or off each of the at least three antenna beams.

An antenna system, according to some embodiments of the present invention, may include a beamforming radio having a plurality of first polarization signal sources and a plurality of first polarization radio signal ports, where each first polarization signal source is coupled to all of the first polarization radio signal ports. The antenna system may include an antenna array having a plurality of columns and a plurality of rows of radiating elements. Moreover, the antenna system may include a coupling circuit that includes a coupler and/or splitter that connects one of the first polarization radio signal ports to at least two of the rows of radiating elements. For example, the splitter may be an RF power divider that connects the one of the first polarization radio signal ports to the at least two of the rows of radiating elements.

A MIMO base station antenna system, herein further described as and preferably being a massive MIMO base station antenna system, according to some embodiments of the present invention, may include at least thirty-six groups, each of which includes a plurality of radiating elements. The massive MIMO base station antenna system may include a beamforming radio having fewer than sixty-four radio signal ports that are coupled to the antenna array. Moreover, the massive MIMO base station antenna system may include a coupling circuit that that couples a first of the radio signal ports to at least two of the groups.

In some embodiments, the beamforming radio may be a 32T32R beamforming radio.

According to some embodiments, each group may include exactly two radiating elements, and the antenna array may have at least six columns and at least six rows of the groups.

In some embodiments, each group may include exactly three radiating elements, and the antenna array may have eight columns and four rows of the groups.

According to some embodiments, a sub-array of the antenna array may include sixteen of the groups.

In some embodiments, a first row of the groups may include a first group of the sub-array and a second group that is outside of the sub-array. Moreover, the coupling circuit may couple the first group to the second group.

According to some embodiments, a first column of the groups may include a first group of the sub-array and a second group that is outside of the sub-array. Moreover, the coupling circuit may couple the first group to the second group.

In some embodiments, a first group of the sub-array may be in a first row and a first column of the groups. A second group that is outside of the sub-array may be in a second row and a second column of the groups. Moreover, the coupling circuit may couple the first group to the second group.

According to some embodiments, the coupling circuit may be an RF power divider.

In some embodiments, the coupling circuit may couple the first of the radio signal ports of the beamforming radio to multiple rows and multiple columns of the groups.

A base station antenna system, according to some embodiments, may include a beamforming radio having a plurality of radio signal ports. The base station antenna system may include an antenna array having a vertical stack of sub-arrays that each include a plurality of sub-columns of dual-polarized radiating elements. A first of the radio signal ports may be coupled to two sub-columns of a first of the sub-arrays. Moreover, a second of the radio signal ports may be coupled to two sub-columns of a second of the sub-arrays.

In some embodiments, each of the two sub-columns of the first of the sub-arrays may include three of the dual-polarized radiating elements. Moreover, each of the radio signal ports may be coupled to six of the dual-polarized radiating elements.

According to some embodiments, the first and the second of the sub-arrays may each be coupled to four of the radio signal ports per polarization.

In some embodiments, a third of the radio signal ports may be coupled to two sub-columns of a third of the sub-arrays. Moreover, a fourth of the radio signal ports may be coupled to two sub-columns of a fourth of the sub-arrays.

According to some embodiments, each of the two sub-columns of the first of the sub-arrays may include six of the dual-polarized radiating elements.

In some embodiments, the base station antenna system may include a plurality of first phase shifters per polarization that are coupled to the first of the sub-arrays. The base station antenna system may include a plurality of second phase shifters per polarization that are coupled to the second of the sub-arrays. The first of the radio signal ports may be coupled to the two sub-columns of the first of the sub-arrays via a first of the first phase shifters, and the second of the radio signal ports may be coupled to the two sub-columns of the second of the sub-arrays via a first of the second phase shifters. Moreover, the first of the sub-arrays may be coupled to four of the first phase shifters per polarization, and the second of the sub-arrays may be coupled to four of the second phase shifters per polarization.

According to some embodiments, the base station antenna system may include a single first phase shifter per polarization that is coupled to every sub-column of the first of the sub-arrays. Moreover, the base station antenna system may include a single second phase shifter per polarization that is coupled to every sub-column of the second of the sub-arrays.

A massive MIMO base station antenna system, according to some embodiments, may include an antenna array having a plurality of radiating elements. The massive MIMO base station antenna system may include a beamforming radio having fewer than sixty-four radio signal ports that are coupled to the antenna array. Moreover, the massive MIMO base station antenna system may include a coupling circuit that couples a first of the radio signal ports to at least two sub-columns of the radiating elements.

In some embodiments, the beamforming radio may be a 32T32R beamforming radio.

According to some embodiments, each sub-column may include exactly two radiating elements or exactly one radiating element. In other embodiments, each sub-column may include exactly three radiating elements, and the antenna array may have eight columns and four rows of the sub-columns.

In some embodiments, a sub-array of the antenna array may include eight of the sub-columns. Moreover, the coupling circuit may include a phase shifter.

A base station antenna system, according to some embodiments, may include a beamforming radio having a plurality of radio signal ports. The base station antenna system may include an antenna array having a plurality of rows and a plurality of columns of radiating elements. Each of the radio signal ports may be coupled to at least two of the columns and no more than half of the rows.

In some embodiments, each of the rows may be coupled to four of the radio signal ports per polarization, and each of the columns may include four sub-columns that are coupled to four of the radio signal ports, respectively, per polarization.

According to some embodiments, each of the radio signal ports may be coupled to one-quarter or one-third of the rows.

### BRIEF DESCRIPTION OF THE DRAWINGS

**FIG. 1A** is a schematic front view of a conventional antenna system that includes an 8T8R radio and an antenna array that includes four columns of dual-polarized radiating elements.
**FIG. 1B** is a table illustrating the relative amplitudes and phases applied to the signals fed to the four columns of the antenna array of **FIG. 1A** in order generate eight antenna beams (four at each polarization).
**FIG. 2A** is a schematic front view of an antenna system according to embodiments of the present invention that includes an 8T8R radio, a coupling circuit, and an antenna array that includes six columns of dual-polarized radiating elements.
**FIG. 2B** is a schematic diagram illustrating a coupling circuit according to embodiments of the present invention that can be used to couple the 8T8R radio of **FIG. 2A** to the six-column antenna array of **FIG. 2A****.**
**FIG. 2C** is a table illustrating the relative amplitudes and phases applied to the signals fed to the six columns of the antenna array of **FIG. 2A** in order generate eight antenna beams (four at each polarization).
**FIG. 3A** is a schematic front view of an antenna system according to embodiments of the present invention that includes an 8T8R radio, a coupling circuit, and an antenna array that includes eight columns of dual-polarized radiating elements.
**FIG. 3B** is a schematic diagram illustrating a coupling circuit according to embodiments of the present invention that can be used to couple the 8T8R radio of **FIG. 3A** to the eight-column antenna array of **FIG. 3A****.**
**FIG. 3C** is a table illustrating the relative amplitudes and phases applied to the signals fed to the four columns of the antenna array of **FIG. 3A** via the coupling circuit of **FIG. 3B** in order generate eight antenna beams (four at each polarization).
**FIG. 3D** is a schematic diagram illustrating another coupling circuit according to embodiments of the present invention that can be used to couple the 8T8R radio of **FIG. 3A** to the eight-column antenna array of **FIG. 3A****.**
**FIG. 3E** is a table illustrating the relative amplitudes and phases applied to the signals fed to the four columns of the antenna array of **FIG. 3A** via the coupling circuit of **FIG. 3D** in order generate eight antenna beams (four at each polarization).
**FIG. 4A** is a schematic front view of an antenna system according to embodiments of the present invention that includes a 10T10R radio, a coupling circuit, and an antenna array that includes eight columns of dual-polarized radiating elements.
**FIG. 4B** is a schematic diagram illustrating a coupling circuit according to embodiments of the present invention that can be used to couple the 10T10R radio of **FIG. 4A** to the eight-column antenna array of **FIG. 4A****.**
**FIG. 4C** is a table illustrating the relative amplitudes and phases applied to the signals fed to the eight columns of the antenna array of **FIG. 4A** via the coupling circuit of **FIG. 4B** in order generate the ten antenna beams (five at each polarization).
**FIG. 5A** is a schematic front view of an antenna system according to embodiments of the present invention that includes a 4T4R radio, a coupling circuit, and an antenna array that includes four columns of dual-polarized radiating elements.
**FIG. 5B** is a schematic diagram illustrating a coupling circuit according to embodiments of the present invention that can be used to couple the 4T4R radio of **FIG. 5A** to the four-column antenna array of **FIG. 5A****.**
**FIG. 5C** is a table illustrating the relative amplitudes and phases applied to the signals fed to the four columns of the antenna array of **FIG. 5A** via the coupling circuit that is shown in **FIG. 5B** in order generate four antenna beams (two at each polarization).
**FIG. 6A** is a schematic front view of an antenna system according to embodiments of the present invention that includes a 8T8R radio, a coupling circuit, and an antenna array that includes five columns of dual-polarized radiating elements.
**FIG. 6B** is a schematic diagram illustrating a coupling circuit according to embodiments of the present invention that can be used to couple the 8T8R radio of **FIG. 6A** (with two ports unused) to the five-column antenna array of **FIG. 6A****.**
**FIG. 6C** is a table illustrating the relative amplitudes and phases applied to the signals fed to the five columns of the antenna array of **FIG. 6A** via the coupling circuit that is shown in **FIG. 6B** in order generate the four antenna beams (two at each polarization).
**FIG. 7A** is a schematic block diagram of an example implementation of the antenna array and coupling circuit of the antenna system of **FIGS. 3A-3B** (illustrating one polarization only).
**FIG. 7B** is a schematic block diagram illustrating how the first polarization signal sources of an 8T8R radio may be coupled to the antenna array and coupling circuit of **FIG. 7A****.**
**FIG. 8** is a schematic diagram of an antenna system according to embodiments of the present invention.
**FIG. 9** is a schematic diagram illustrating how the antenna systems according to embodiments of the present invention may be viewed as including a plurality of multi-column sub-arrays.
**FIG. 10** is a schematic diagram illustrating a Butler Matrix beamforming network that is connected to the coupling circuit of **FIG. 3D****.**
**FIGS. 11A** and **11B** are schematic front views of massive MIMO antenna systems according to embodiments of the present invention.
**FIG. 12A** is a schematic diagram illustrating a coupling circuit according to embodiments of the present invention that can be used to couple a port of the 32T32R radio of **FIG. 11A** to multiple rows and multiple columns of the antenna array of **FIG. 11A****.**
**FIG. 12B** is a schematic diagram illustrating a coupling circuit according to embodiments of the present invention that can be used to couple a port of the 32T32R radio of **FIG. 11B** to multiple rows and multiple columns of the antenna array of **FIG. 11B****.**
**FIG. 13A** is a schematic front view of a massive MIMO antenna system having four rows according to embodiments of the present invention.
**FIG. 13B** is a schematic diagram illustrating a first-polarization portion and a second-polarization portion of the coupling circuit of **FIG. 13A** coupled to the rows of **FIG. 13A****.**
**FIG. 13C** is an enlarged schematic diagram illustrating a first of the rows of **FIG. 13A****.**
**FIGS. 13D** and **13E** are schematic diagrams illustrating examples in which the coupling circuit of **FIG. 13A** includes a plurality of elements per polarization that are coupled between ports of the 32T32R radio of **FIG. 13A** and multiple columns of the antenna array of **FIG. 13A****.**
**FIG. 13F** is a schematic diagram illustrating a further example in which the coupling circuit of **FIG. 13A** includes a single phase shifter per polarization that is coupled to a first of the rows of **FIG. 13A****.**
**FIG. 13G** is a schematic front view of a massive MIMO antenna system that is modified relative to the system of **FIG. 13A** to provide two rows.
**FIGS. 13H** and **13I**are schematic diagrams that are modified relative to the diagram of **FIG. 13B** to provide three rows and two rows, respectively.

### DETAILED DESCRIPTION

Pursuant to embodiments of the present invention, antenna systems (e.g., base station antenna systems) are provided that include antenna arrays that have multiple columns of radiating elements, where at least some of the columns are coupled to the same RF ports of a radio (herein "radio signal ports"). The radiating elements may be dual-polarized radiating elements so that the multi-column antenna array may generate multiple antenna beams at each polarization. In example embodiments, an eight-column (or six-column) antenna array may be fed by a radio that has fewer than eight (or fewer than six) radio signal ports per polarization. In particular, a coupling circuit that may include analog RF components, such as RF couplers and/or splitters, may couple at least some of the radio signal ports to respective pairs of columns of the antenna array. As a result, the radio may include fewer radio signal ports (per polarization) than there are columns of the antenna array. This allows the antenna systems according to embodiments of the present invention to provide improved antenna patterns and higher gains while using relatively inexpensive radios.

As discussed above, conventionally, 8T8R TDD beamforming radios are used in conjunction with antenna arrays having four columns of dual-polarized radiating elements. This implementation provides a relatively low cost beamforming solution, but may suffer from low gain (and hence low capacity) and relatively coarse antenna patterns that are not ideal. If higher performance is required, 16T16R TDD beamforming radios may be used in conjunction with antenna arrays having eight columns of dual-polarized radiating elements. This implementation provides increased gain, improved antenna beams and supports higher capacity, but may be significantly more expensive. Pursuant to embodiments of the present invention, antenna systems are provided that may, for example, include an 8T8R TDD beamforming radio in conjunction with antenna arrays having more than four columns of dual-polarized radiating elements(e.g., six columns or eight columns). This implementation provides increased gain and improved antenna beams as compared to the low cost solution discussed above, although not quite as good of performance as the high capacity solution. The antenna systems according to embodiments of the present invention thus may provide an intermediate solution that may be acceptable for many applications that previously required the high cost solution.

Embodiments of the present invention will now be discussed in greater detail with reference to the attached figures.

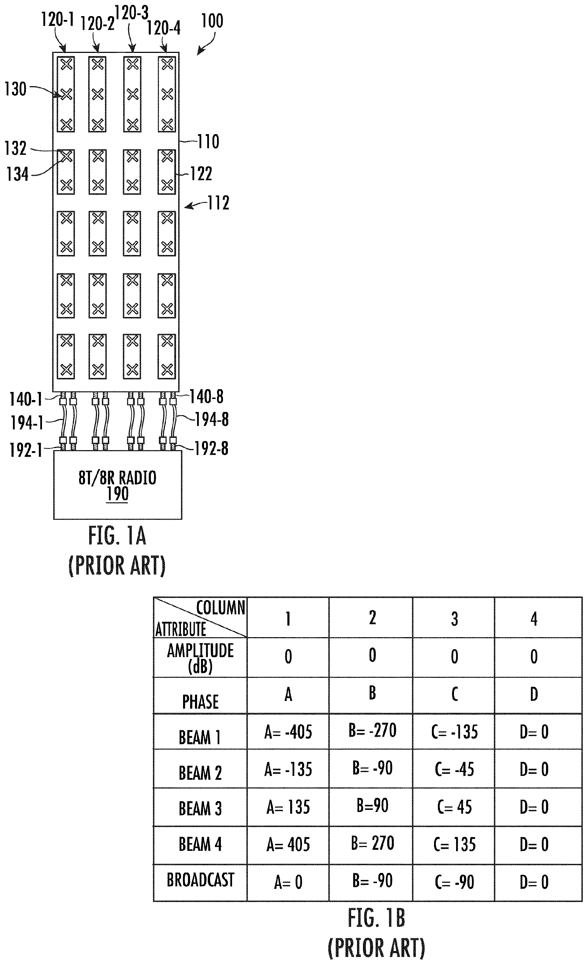

**FIG. 1A** is a schematic front view of a conventional antenna system **100** that includes an 8T8R radio **190** and an antenna **110** having an antenna array **112** that includes four columns **120-1** through **120-4** of dual-polarized radiating elements **130.** Each radiating element **130** may comprise, for example, a crossed-dipole radiating element that includes a first dipole radiator **132** and a second dipole radiator **134** that crosses/intersects the first dipole radiator **132.** The dipole radiators **132** and **134** each have two dipole "arms." Each column **120** includes one or more groups **122** (e.g., one or more sub-arrays) of radiating elements **130.** Note that herein when multiple like elements are provided, they may be numbered using two-part reference numerals. These elements may be referred to individually by their full reference numeral (e.g., column **120-3**), and may be referred to collectively by the first part of their reference numeral (e.g., the columns **120**).

The array of columns **120** may be inside a radome of the antenna **110** (not shown). The antenna **110** may include RF ports **140-1** through **140-8,** which may also be referred to herein as "connectors" or "antenna signal ports," that are coupled (e.g., electrically connected) to the columns **120.** In particular, antenna signal ports **140-1, 140-3, 140-5** and **140-7** are coupled to the first radiators **132** of the radiating elements **130** of columns **120-1, 120-2, 120-3** and **120-4,** respectively, and antenna signal ports **140-2, 140-4, 140-6** and **140-8** are coupled to the second radiators **134** of the radiating elements **130** of columns **120-1, 120-2, 120-3** and **120-4,** respectively. As is further shown in **FIG. 1A****,** the antenna signal ports **140** are also coupled to respective radio signal ports **192** of the radio **190** by respective RF transmission lines **194-1** through **194-8,** such as coaxial cables. For example, the radio **190** may be a TDD beamforming radio for a cellular base station, and the antenna **110** and the radio **190** may be located at (e.g., may be components of) a cellular base station.

Because the radio **190** is shown as an 8T8R radio, it includes eight RF ports **192-1** through **192-8** that pass RF communication signals between the internal components of the radio **190** and the antenna array **112.** These ports **192** may also be referred to herein as "radio signal ports." For example, four of the radio signal **192** may be first polarization ports and another four of the radio signal **192** may be second polarization ports, where the first and second polarizations are different polarizations. The radio **190** may also include one or more calibration ports (not shown) that are not radio signal ports, but instead are ports that may be used in calibrating the internal circuitry of the radio **190** to account for amplitude and phase differences between the RF signal paths external to the radio **190.**

The 8T8R radio **190** includes four RF first polarization signal sources and four second polarization signal sources. Each first polarization RF signal source in radio **190** is coupled to the four first polarization radio signal ports (here radio signal ports **192-1, 192-3, 192-5, 192-7**), and each second polarization RF signal source in radio **190** is coupled to the four second polarization radio signal ports (here radio signal ports **192-2, 192-4, 192-6, 192-8**).

**FIG. 1B** is a table illustrating the relative amplitudes and phases applied to the RF signals fed to the four columns of the antenna array of **FIG. 1A** in order generate eight antenna beams (four at each polarization). The table of **FIG. 1B** only illustrates the relative amplitudes and phases of the RF signals fed to the first polarization radiators **132** of the columns **120.** It will be appreciated that the same relative amplitudes and phases of the RF signals fed to the first polarization radiators **132** of the columns **120.**

In **FIG. 1B****,** the rows labeled "Beam X" (X = 1, 2, 3, 4) show the relative phases of the four RF signals that are provided to the first radiators **123** of the radiating elements **130** in the four columns **120.** Thus, for example, the first signal source (Beam 1) outputs a signal having a relative amplitude of 0 dB and a relative phase of -405 to the radiators **132** of the first column **120-1,** outputs a signal having a relative amplitude of 0 dB and a relative phase of -270 to the radiators **132** of the second column **120-1,** outputs a signal having a relative amplitude of 0 dB and a relative phase of -135 to the radiators **132** of the third column **120-3,** and outputs a signal having a relative amplitude of 0 dB and a relative phase of 0 to the radiators **132** of the fourth column **120-4**. The four RF signals output by the first signal source in radio **190** to the four columns **120-1** through **120-4** as described above generate a first antenna beam that points in a first direction in the azimuth plane. The second, third and fourth signal sources in radio **190** generate second, third and fourth antenna beams that point in three additional directions in the azimuth plane.

**FIG. 1B** also shows the phases that may be applied by the radio **190** in order to generate a so-called "broadcast" beam. As is known in the art, a broadcast beam refers to a beam that is formed by a beamforming antenna that is a wide beamwidth beam that is designed to cover the entire coverage area that is served by the antenna system. The broadcast beam is a single beam that is used to communicate with all users throughout the coverage area.

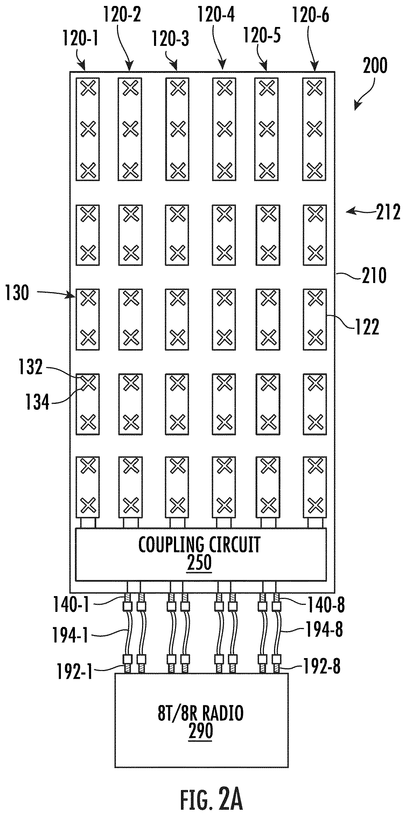

**FIG. 2A** is a schematic front view of an antenna system **200** according to embodiments of the present invention that includes an 8T8R radio **290** (e.g., a TDD beamforming radio), a coupling circuit **250,** and an antenna **210** having antenna array **212** that includes six columns **120-1** through **120-6** of dual-polarized radiating elements **130.** It will be appreciated that the antenna system **200** may include additional columns of radiating elements (not shown).

The antenna **210** may include antenna signal ports **140** that are coupled to the columns **120.** The antenna signal ports **140** are also coupled to respective radio signal ports **192** of the radio **290** by RF transmission lines **194.** The radio **290** may be a TDD beamforming radio, and the antenna **210** and the radio **290** may be located at (e.g., may be components of) a cellular base station.

The columns **120** may be referred to herein as "vertical" columns, as they may extend in a vertical direction from a lower portion of the antenna **210** to an upper portion of the antenna **210.** The vertical direction may be, or may be parallel with, a longitudinal axis of the antenna **210,** which may be perpendicular to the horizon. As used herein, the term "vertical" does not necessarily require that something is exactly vertical (e.g., the antenna **210** may have a small mechanical down-tilt). Additionally, in the depicted embodiment, the radiating elements **132** are arranged in true rows and columns. It will be appreciated that in many cases every other column **120** may be offset in the vertical direction so that every column **120** is "staggered" in the vertical direction with respect to its one or more adjacent columns **120.** This "staggered" approach may increase the distance between radiating elements **132** in adjacent columns **120** and hence improve the isolation between adjacent columns **120.**

The coupling circuit **250** connects (e.g., electrically connects) the antenna signal ports **140** to the columns **120.** Specifically, the coupling circuit **250** is configured to split an RF signal that is input to a first of the antenna signal ports **140** into two sub-components and to feed the two sub-components of this RF signal to the first polarization radiators **132** of the radiating elements **130** in respective first and second of the columns **120.** The coupling circuit **250** is further configured to split an RF signal that is input to a second of the antenna signal ports **140** into two sub-components and to feed the two sub-components of this RF signal to the first polarization radiators **132** of the radiating elements **130** in respective third and fourth of the columns **120.** The coupling circuit **250** is likewise configured to similarly split RF signals that are input to third and fourth of the antenna signal ports **140** into respective pairs of sub-components and to feed those sub-components to the second polarization radiators **130** of the radiating elements **130** in a similar fashion. The coupling circuit **250** may comprise various types of analog RF circuitry, such as a plurality of RF couplers and/or a plurality of RF splitters/combiners (e.g., RF power dividers). Though shown in **FIG. 2A** as being inside the antenna **210,** the coupling circuit **250** may, in some embodiments, be external to the antenna **210.** As an example, the coupling circuit **250** may be a standalone device that is coupled between (a) the radio signal ports **192** and (b) the antenna signal ports **140.**

Because the radio **290** is shown as an 8T8R radio, it includes eight radio signal ports **192-1** through **192-8**. Four of the radio signal ports **192** may be first polarization ports and another four of the radio signal ports **192** may be second polarization ports, where the first and second polarizations are different polarizations. As will be discussed below, other radios having different numbers of radio signal ports may be used in other embodiments. For example, in some embodiments, a 4T4R radio having four radio signal ports or a 10T10R radio having ten radio signal ports **192** (e.g., five first polarization radio signal ports and five second polarization radio signal ports) may be used instead of the 8T8R radio 290.

The number of columns **120** of dual-polarized radiating elements **130** included in antenna **210** exceeds the number of first polarization radio signal ports **192** included on radio **290.** In order utilize all six columns **120** at both polarizations, at least some of the radio signal ports **192** are shared across multiple (here two) columns **120** using the coupling circuit **250.** Thus, by providing the coupling circuit **250,** the correspondence between the number of columns and the number of first (or second) polarization radio signal ports on the beamforming radio may be broken, and hence the antenna **210** may include five, six, seven, eight, or more columns **120,** even though the radio **290** only has four radio signal ports **192** per polarization.

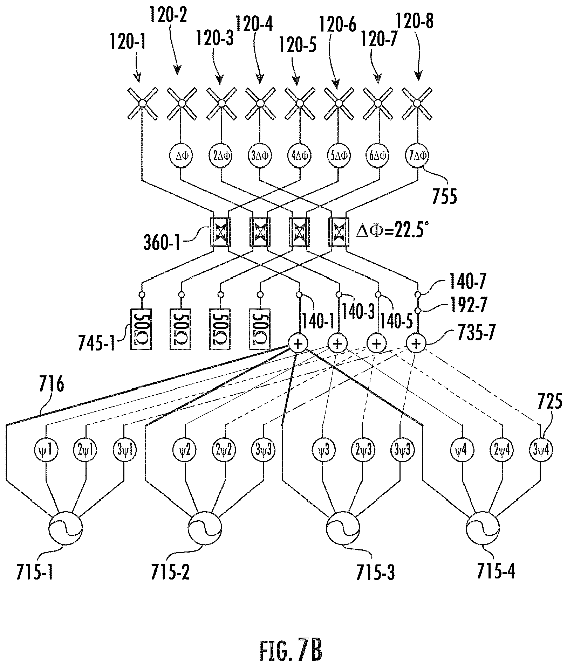

Butler Matrices have been used in the past to couple radio signal ports to a multi-column antenna array, where the number of radio signal ports per polarization did not necessarily equal the number of columns of radiating elements in the antenna array. However, such conventional techniques were used with multiple standard frequency division duplex ("FDD") radios to form multiple static antenna beams for sector-splitting operations. Each radio signal port was connected to a single signal source, and the Butler Matrix was used to split and phase shift the RF signals provided by each signal source so as to feed the RF signals to all of the columns in the antenna array. This typically required a series of layers of hybrid couplers or other analog circuit elements that could significantly increase the insertion loss of the antenna. Pursuant to embodiments of the present invention, beamforming radios may be used that feed combined signal sources in the digital domain so that each radio signal port may output sub-components of the RF signals generated by multiple signal sources. A small number of additional analog components (e.g., hybrid couplers or Wilkinson power dividers) may then be used to further sub-divide the RF signals output at one or more of the radio signal ports so that all of the columns **120** of the antenna array **212** are fed. In other words, the radio **290** may perform some beamforming RF signal operations in a digital domain, thereby simplifying antenna system hardware and improving insertion loss. For example, as will be discussed below with reference to **FIG. 7B****,** in one example embodiment the radio **290** may include four RF signal sources **715** and may be configured to combine the RF signals generated by all four signal sources **715** before outputting the combined signal from a radio signal port **192.** Each of the signal sources **715** may be coupled to all of the radio signal ports **192** and may be configured to generate a respective RF signal component **716** of each antenna beam that the columns **120** transmit, and the radio **290** may be configured to control each of the signal sources **715** to individually turn on or off each antenna beam.

Though the system **200** has only one radio **290,** antenna systems according to other embodiments of the present invention may include multiple radios that are coupled to the same antenna array. For example, additional radios and diplexers could be provided to provide a frequency division duplex ("FDD") twin-beam or tri-beam or quad-beam antenna system that operated in a different sub-band of the operating frequency range of the radiating elements **130** so that the antenna array **212** may be used as a TDD beamforming array in the first sub-band and as an FDD sector splitting array in the second sub-band.

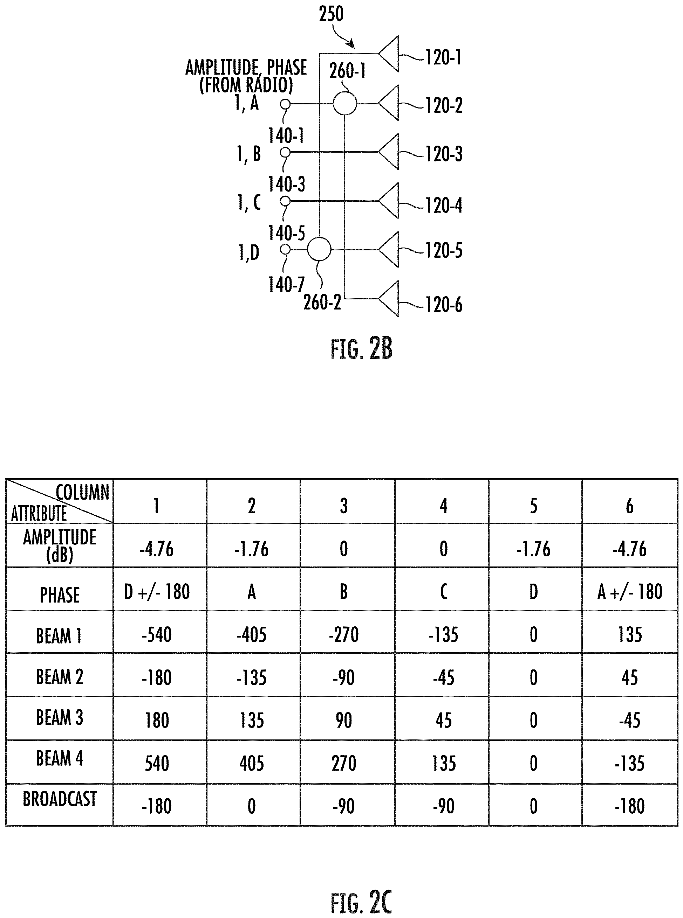

**FIG. 2B** is a schematic diagram illustrating a coupling circuit **250** according to embodiments of the present invention that can be used to couple the 8T8R radio **290** of **FIG. 2A** to the six-column antenna array **212** of **FIG. 2A****.** As shown in **FIG. 2B****,** the coupling circuit **250** may include first and second couplers and/or splitters **260-1** and **260-2.** The first coupler and/or splitter **260-1** connects (e.g., electrically connects) a first antenna signal port **140-1** to both a second column **120-2** and a sixth column **120-6.** Similarly, the second coupler and/or splitter **260-2** connects a seventh antenna signal port **140-7** to both a first column **120-1** and a fifth column **120-5.**

The ports **140-1** and **140-7,** as well as ports **140-3** and **140-5,** may be first polarization ports. For simplicity of illustration, second polarization antenna signal ports **140-2, 140-4, 140-6,** and **140-8** are omitted from view in **FIG. 2B****.** An identical coupling circuit **250** may be used to couple the second polarization antenna signal ports **140-2, 140-4, 140-6,** and **140-8** to the six columns **120-1** through **120-6** of antenna array **212.** Moreover, in some embodiments, the coupling circuit **250** may be external to the antenna **210,** and the couplers and/or splitters **260** may thus couple radio signal ports **192** to respective pairs of antenna signal ports **140.**

The couplers and/or splitters **260-1** and **260-2** are coupled to respective non-adjacent pairs of columns **120.** As used herein with respect to columns **120,** the term "non-adjacent" refers to two columns **120** that have least one other column **120** therebetween. For example, **FIG. 2B** shows that each commonly-coupled pair has three columns **120** therebetween. Accordingly, the same distance can separate each commonly-coupled pair.

In some embodiments, the couplers and/or splitters **260-1** and **260-2** may be respective analog RF couplers. Herein, the term "coupling circuit" is used to cover a wide variety of power coupling and/or splitting devices, including four-port devices such as hybrid couplers, branch line couplers, rat race couplers, and the like, and three-port devices such as Wilkinson power couplers/dividers and the like.

Moreover, a coupling circuit according to other embodiments may include more than two couplers and/or splitters that are coupled to respective pairs of columns **120.** In some embodiments, the total number of couplers and/or splitters (in a coupling circuit) that couple X first polarization antenna signal ports **192** to Y columns **120** (via Z first polarization antenna signal ports **140 (****FIG. 2A****)** of an antenna) may be equal to Y - X and/or may be equal to Y - Z, where X, Y and Z are positive integers and Y is larger than both X and Z. In some embodiments, the total number of couplers and/or splitters may be equal to X. As a result, Y may equal 2*X in some embodiments and RF outputs of each coupler and/or splitter may thus be coupled to only (i.e., exactly) two columns **120.** In other embodiments, a 4x4 Butler matrix may be used that includes 4 couplers that connect Z = 4 ports **140** with Y = 4, 6, or 8 columns **120.**

In some embodiments, the radio **290** may include W first polarization signal sources that are each coupled to all of the X radio signal ports **192.** Each first polarization signal source may also be coupled by the coupling circuit **250** to all of the Y columns **120** of the antenna array **212.**

Each coupler and/or splitter **260** may, in some embodiments, be a four-port coupler having (i) an RF input port that is coupled to a respective one of the X radio signal ports **192,** (ii) a first RF output port that is coupled to one of the Y columns **120,** (iii) a second RF output port that is coupled to another of the Y columns **120,** and (iv) an isolation port that is coupled to a resistive termination (e.g., a 50-Ohm resistor).

In some embodiments, the orientation of the hook baluns on the dipole radiators **132, 134** of the radiating elements **130** included in columns **120-1** and **120-6** may be reversed as compared to the orientation of the hook baluns on the dipole radiators **132, 134** of the radiating elements **130** included in columns **120-2** through **120-5**. By reversing or "flipping" the hook baluns on dipole radiators **132, 134** of the radiating elements **130 (****FIG. 2A****),** the phases of the RF signals fed to the radiating elements **130** of columns **120-1** and **120-6** may be shifted by 180 degrees relative to the phases of the RF signals fed to the radiating elements **130** of columns **120-2** and **120-5.** Moreover, in some embodiments, the columns **120** may be spaced apart by about 0.5 wavelengths at the operating frequency (e.g., by at least 62 millimeters ("mm")).

The antenna system **200** may provide improved performance as compared to the conventional antenna system **100** of **FIG. 1A****.** In particular, since the antenna array **212** includes six columns **120** of radiating elements (versus the four columns **120** included in antenna system **100)** the gain of antenna array **212** may be approximately 0.4 dB greater than the gain of antenna array **112.** Additionally, the antenna beams (e.g., at least three beams per polarization) generated by antenna array **212** may exhibit improved roll-off as compared to the antenna beams generated by antenna array **112.**

**FIG. 2C** is a table illustrating the relative amplitudes and phases applied to the signals fed to the six columns of the beamforming antenna array of **FIG. 2A** in order generate eight antenna beams (four at each polarization). The table of **FIG. 2C** may be interpreted in the same fashion as described above with reference to the similar table of **FIG. 1B****.** The amplitudes shown for columns 1, 2, 5, and 6 are merely examples. Accordingly, a different amplitude ratio can be provided between the couplers and/or splitters **260-1** and **260-2.**

As shown in **FIG. 2C****,** two columns **120** that are commonly coupled to a coupler and/or splitter **260** may transmit 180 degree phase-shifted versions of the same signal. For example, the fifth column **120-5** may transmit a signal having a phase "D" while the first column **120-1** may transmit an RF signal having a phase of D +/- 180 degrees. Similarly the second column **120-2** may transmit a signal having a phase "A" while the sixth column **120-6** may transmit an RF signal having a phase of A +/- 180 degrees.

These phase offsets, however, may not necessarily be exactly 180 degrees. In particular, the phase offsets can be adjusted via a phase shifter so that they are not exactly 180 degrees. This can allow different beamforming possibilities, and can avoid having sub-array patterns for coupled columns **120** that have local minima at given angles. More precisely, though the minima may still exist, control can be provided over where they occur.

Moreover, each antenna beam may be transmitted with a different respective phase for all of the columns **120.** As an example, the RF signals fed to the six columns **120** to form the first antenna beam (Beam 1 in **FIG. 2C****)** may have phases of -540 degrees, -405 degrees, -270 degrees, -135 degrees, 0, and +135 degrees at the columns **120-1** through **120-6,** respectively. The phases do not, however, have to be in an arithmetic sequence and thus can be widely adjusted. Also, different antenna beams may be transmitted with different sets of phases for the columns **120,** as is further shown in the table of **FIG. 2C****.**

It should also be noted that the amplitudes of the signals are fed to the different columns **120.** In particular, the RF signals fed to columns **120-3** and **120-4** may have a relative amplitude of 0 dB since these signals are not passed through a coupler and/or splitter. The couplers and/or splitters **260** may be implemented as four-port hybrid couplers, which may be assumed to have an insertion loss of, for example, 1 dB. The smaller signal output by each coupler and/or splitter **260** is fed to the outer column **120,** and hence the signals fed to columns **120-1** and **120-6** may have relative amplitudes of -4.76 dB (i.e., an insertion loss of 1 dB and the coupler and/or splitter **260** reduces the magnitude of the signal by an additional 3.76 dB), and the signals fed to columns **120-2** and **120-5** may have relative amplitudes of -1.76 dB (i.e., an insertion loss of 1 dB and the coupler and/or splitter **260** reduces the magnitude of the signal by an additional 0.76 dB).

Each antenna beam (i.e., Beam 1 through Beam 4 in **FIG. 2C****)** may provide coverage to a different portion of a 120 degree sector in some embodiments. Moreover, these antenna beams may be referred to herein as "switched" or "switchable" beams because they can be selectively transmitted to one or more particular sectors. For example, the beamforming radio **290** may generate only one antenna beam (e.g., Beam 1 or Beam 3, as two examples) during a first time slot of the TDD communication frame, and may generate more than one antenna beam during other time slots (e.g., two antenna beams, three antenna beams, or all four antenna beams).

In some embodiments, the antenna array **212** (or any of the other antenna arrays according to embodiments of the present invention that are described herein) may be designed to operate in multiple sub-bands of an operating frequency band of the radiating elements **130.** For example, the radiating elements **130** may be designed to operate in the 2.2-2.7 GHz operating frequency band (or the 1.7-2.7 GHz operating frequency band). In such embodiments, the antenna array **212** may be designed to operate in either or both the 2.3 GHz sub-band or the 2.6 GHz sub-band, for example. In such an embodiment, the antenna array could be coupled to a 2.3 GHz TDD beamforming radio for operation in the 2.3 GHz sub-band, or could be coupled to a 2.6 GHz TDD beamforming radio for operation in the 2.6 GHz sub-band. Alternatively, diplexers could be used (which could be either internal to the antenna **210** or external to the antenna **210)** that allow both a 2.3 GHz TDD beamforming radio and a 2.6 GHz TDD beamforming radio to simultaneously transmit and receive RF signals through the antenna array **212.** In such embodiments, the spacing between adjacent columns may be selected so that the distance between adjacent columns is close to 0.5 wavelengths in both operating frequency bands. For example, a spacing of 62 mm between adjacent columns corresponds to 0.47 wavelengths at 2.3 GHz and to 0.54 wavelengths at 2.6 GHz, which represents a compromise in order to obtain good (but not ideal) performance in both sub-bands.

As is further shown in **FIG. 2C****,** the antenna system **200** can also generate a broadcast beam that provides coverage to the full coverage area of the antenna **210.** This broadcast beam may be used to, for example, transmit common control signals to all of the users within the coverage area of the antenna **210.** It will be appreciated that each of the antenna systems according to embodiments of the present invention may be configured to generate such broadcast beams.

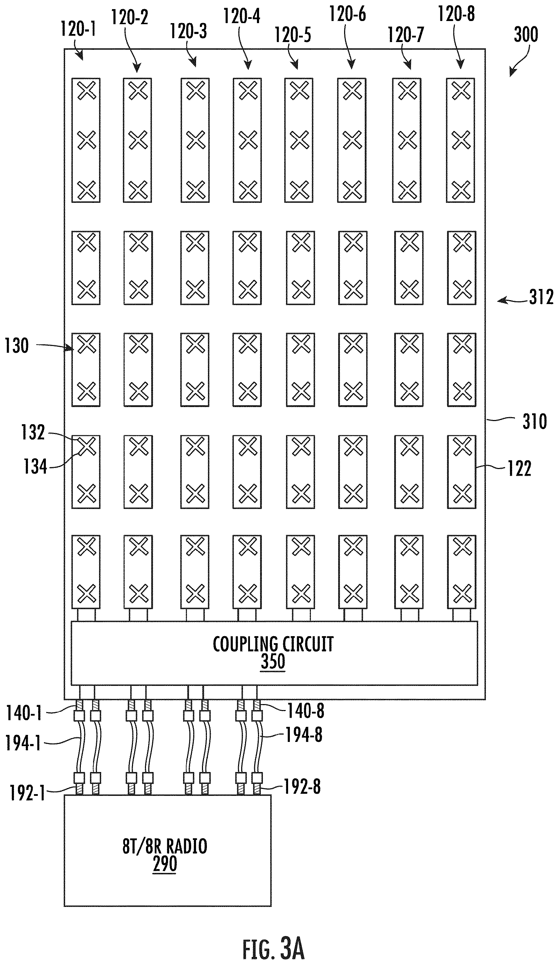

**FIG. 3A** is a schematic front view of an antenna system **300** according to embodiments of the present invention that includes an 8T8R radio **290,** a coupling circuit **350,** and an antenna **310** having an antenna array **312** that includes eight columns **120-1** through **120-8** of dual-polarized radiating elements **130.** The antenna array **312** thus includes two more columns **120** than the antenna array **212 (****FIG. 2A****)** and four more than the antenna array **112 (****FIG. 1A****).** Accordingly, the coupling circuit **350** may include more couplers and/or splitters than the coupling circuit **250 (****FIG. 2A****).** Moreover, to improve azimuth side lobes (e.g., by about 2-3 decibels ("dB")), one or more outer columns **120-1, 120-2, 120-7,** and **120-8** may include fewer radiating elements **130** than inner columns **120-3** through **120-6.**

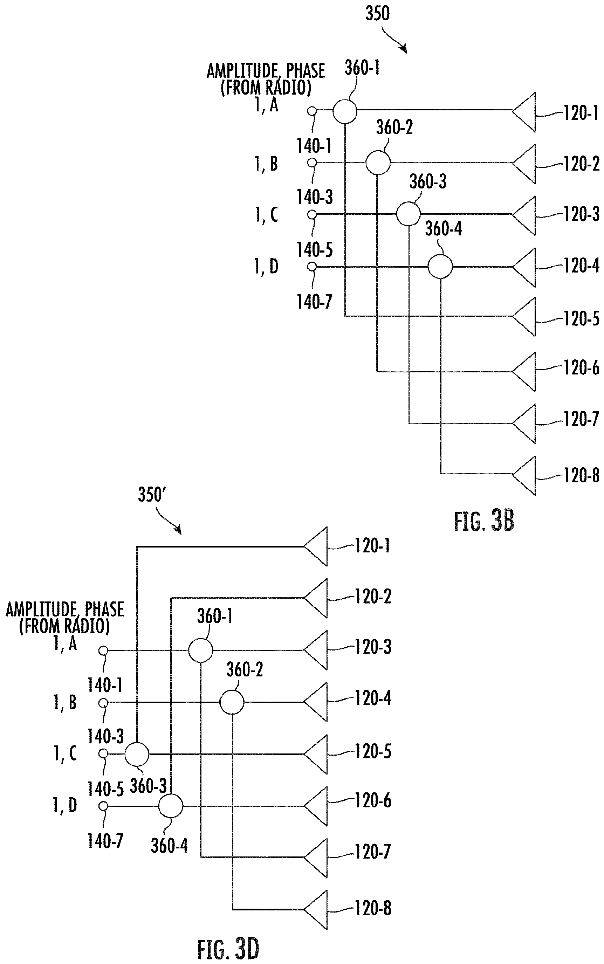

**FIG. 3B** is a schematic diagram illustrating a coupling circuit **350** according to embodiments of the present invention that can be used to couple the 8T8R radio **290** of **FIG. 3A** to the eight-column antenna array of **FIG. 3A****.** The coupling circuit **350** may include four couplers and/or splitters **360-1** through **360-4.** Each of the couplers and/or splitters **360** may electrically connect a respective radio signal port **192** of the radio **290** (via a respective antenna signal port **140** of the antenna **310)** to a pair of columns **120.**

The first coupler and/or splitter **360-1** connects a first antenna signal port **140-1** of the antenna **310** to both the first column **120-1** and the fifth column **120-5.** The second coupler and/or splitter **360-2** connects a third antenna signal port **140-3** of the antenna **310** to both the second column **120-2** and the sixth column **120-6.** The third coupler and/or splitter **360-3** connects a fifth antenna signal port **140-5** of the antenna **310** to both the third column **120-3** and the seventh column **120-7.** Similarly, the fourth coupler and/or splitter **360-4** connects a seventh antenna signal port **140-7** of the antenna **310** to both the fourth column **120-4** and the eighth column **120-8.** The antenna signal ports **140-1, 140-3, 140-5,** and **140-7** may be first polarization ports. For simplicity of illustration, second polarization ports **140-2, 140-4, 140-6,** and **140-8** are omitted from view in **FIG. 3B****.** An identical circuit including another four couplers and/or splitters **360** may connect the second polarization ports **140-2, 140-4, 140-6,** and **140-8** to the eight columns **120** of antenna array **212.**

In some embodiments, the orientation of the hook baluns on the dipole radiators **132, 134** of the radiating elements **130** included in columns **120-5** through **120-8** may be reversed as compared to the orientation of the hook baluns on the dipole radiators **132, 134** of the radiating elements **130** included in columns **120-1** through **120-4,** thus offsetting the phases of the signals fed to the four left-side columns **120** as compared to the four right-side columns **120** by 180 degrees. Moreover, the columns **120** may be spaced apart from each other by at least 62 mm in some embodiments.

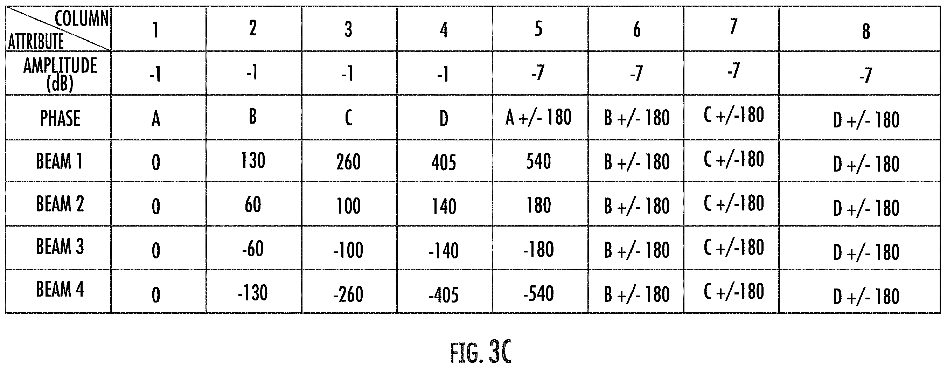

**FIG. 3C** is a table illustrating the relative amplitudes and phases applied to the signals fed to the four columns **120** of the antenna array **312** of **FIG. 3A** via the coupling circuit **350** of **FIG. 3B** in order generate eight antenna beams (four at each polarization). The table of **FIG. 3C** may be interpreted in the same manner as the table of **FIG. 1B****,** which is described in detail above. It will be appreciated that the amplitudes and phases shown in the table of **FIG. 3C** may be adjusted in order to "tune" the shapes of the generated antenna beams in order to meet customer requirements. The amplitudes shown are merely examples.

**FIG. 3D** is a schematic diagram illustrating another coupling circuit **350'** according to embodiments of the present invention that can be used to couple the 8T8R radio **290** of **FIG. 3A** to the eight-column antenna array **312** of **FIG. 3A****.** The first coupler and/or splitter **360-1** connects the first antenna signal port **140-1** of the antenna **310** to both the third column **120-3** and the seventh column **120-7.** The second coupler and/or splitter **360-2** connects the third antenna signal port **140-3** to both the fourth column **120-4** and the eighth column **120-8.** The third coupler and/or splitter **360-3** connects the fifth antenna signal port **140-5** to both the first column **120-1** and the fifth column **120-5.** Similarly, the fourth coupler and/or splitter **360-4** connects the seventh antenna signal port **140-7** to both the second column **120-2** and the sixth column **120-6.** Accordingly, as shown in **FIGS. 3B** and **3D****,** the couplers and/or splitters **360** can feed various combinations of non-adjacent columns **120.**

In some embodiments, the orientation of the hook baluns on the dipole radiators **132, 134** of the radiating elements **130** included in columns **120-1, 120-2, 120-7** and **120-8** may be reversed as compared to the orientation of the hook baluns on the dipole radiators **132, 134** of the radiating elements **130** included in columns **120-3** through **120-6** in order to implement the phase shifts between the signals fed to various of the columns **120.** Moreover, the columns **120** may be spaced apart from each other by at least 62 mm.

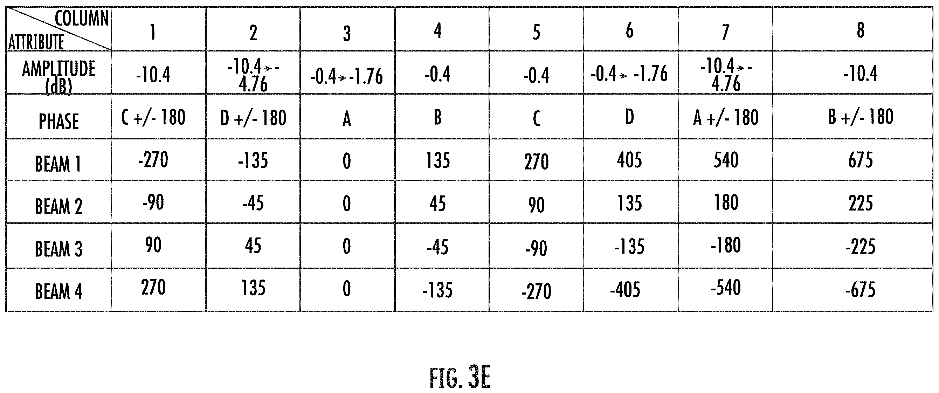

**FIG. 3E** is a table illustrating the relative amplitudes and phases applied to the signals fed to the four columns **120** of the antenna array **312** of **FIG. 3A** via the coupling circuit **350'** of **FIG. 3D** in order generate eight antenna beams (four at each polarization). The table of **FIG. 3E** may be interpreted in the same manner as the table of **FIG. 1B****,** which is described in detail above. It will be appreciated that the amplitudes and phases shown in the table of **FIG. 3E** may be adjusted in order to "tune" the shapes of the generated antenna beams in order to meet customer requirements.

In the table of **FIG. 3E****,** the amplitudes for the RF signals fed to some of the columns are shown being within various ranges. For example, the amplitude of the RF signal fed to column **120-2** is shown as being in the range of -10.4 dB to -4.76 dB, and the amplitude of the RF signal fed to column **120-3** is shown as being in the range of -0.4 dB to - 1.76 dB. This illustrates how couplers and/or splitters having different power division ratios may be used in order to fine tune the shapes of the antenna beams in order to meet customer requirements.

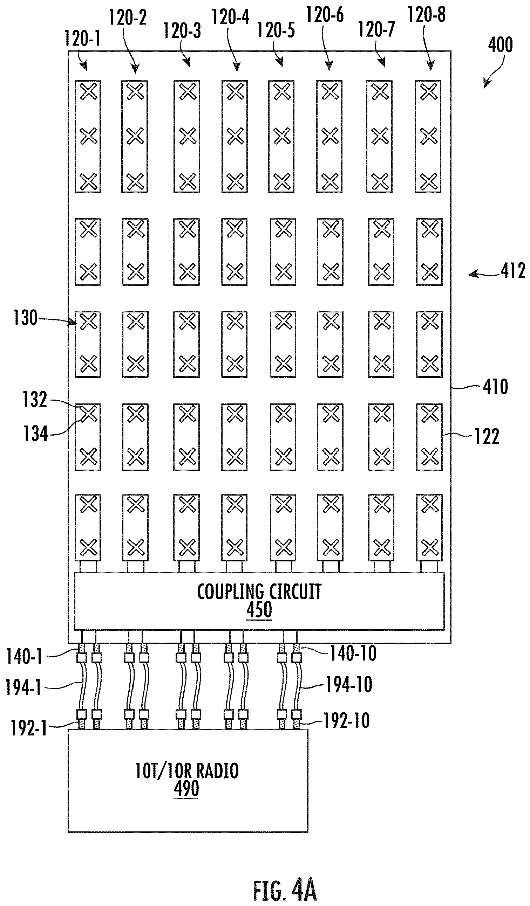

**FIG. 4A** is a schematic front view of an antenna system **400** according to further embodiments of the present invention that includes a 10T10R radio **490,** a coupling circuit **450,** and an antenna **410** having an antenna array **412** that includes eight columns **120** of dual-polarized radiating elements **130.**

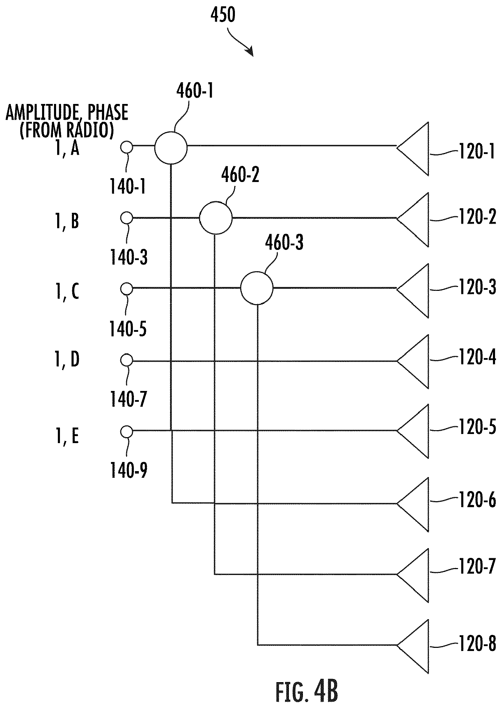

**FIG. 4B** is a schematic diagram illustrating an embodiment of the coupling circuit **450** that can be used to couple the 10T10R radio **490** of **FIG. 4A** to the eight-column antenna array of **FIG. 4A****.** The coupling circuit **450** may include three couplers and/or splitters **460-1** through **460-3.** Each of the couplers and/or splitters **460** may electrically connect a respective radio signal port **192** of the radio **490** (via a respective antenna signal port **140** of the antenna **410)** to a pair of columns **120** of antenna array **412.**

The first coupler and/or splitter **460-1** connects the first antenna signal port **140-1** to both the first column **120-1** and the sixth column **120-6.** The second coupler and/or splitter **460-2** connects the third antenna signal port **140-3** to both the second column **120-2** and the seventh column **120-7.** Likewise, the third coupler and/or splitter **460-4** connects the fifth antenna signal port **140-5** to both the third column **120-3** and the eighth column **120-8.** Accordingly, each commonly-coupled pair of columns **120** may be a non-adjacent pair having four columns **120** therebetween.

Columns **120-4** and **120-5** may, in some embodiments, be individually (rather than commonly) coupled to respective antenna signal ports **140-7** and **140-9.** Antenna signal ports **140-1** and **140-5,** as well as antenna signal ports **140-3, 140-7,** and **140-9,** may be first polarization ports. For simplicity of illustration, second polarization antenna signal ports **140-2, 140-4, 140-6, 140-8, and 140-10** are omitted from view in **FIG. 4B****.** An identical circuit including three additional couplers and/or splitters **460** may be used to couple the second polarization antenna signal ports **140-2, 140-4, 140-6, 140-8, and 140-10** to the second polarization radiators **134** of the radiating elements **130** in antenna array **412.**

The coupling circuit **450** may be configured to provide a 180-degree phase offset between commonly-coupled columns **120.** Moreover, the columns **120** may be spaced apart from each other by about 62 mm.

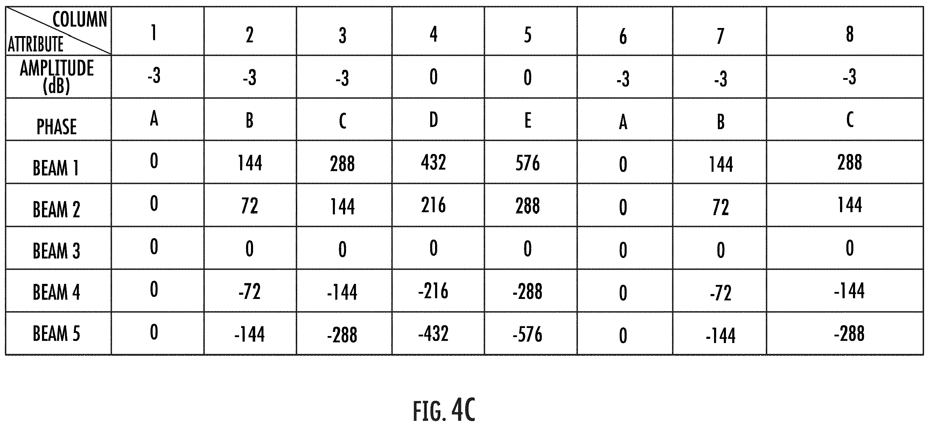

**FIG. 4C** is a table illustrating the relative amplitudes and phases applied to the signals fed to the eight columns of the antenna array of **FIG. 4A** via the coupling circuit of **FIG. 4B** in order generate the ten antenna beams (five at each polarization). As shown in **FIG. 4C****,** in an example embodiment, columns **120-1** through **120-3** may be fed RF signals having the same amplitude and phase as the RF signals fed to columns **120-6** through **120-8,** respectively. Columns **120-4** and **120-5,** on the other hand, may be fed RF signals different amplitudes and phases.

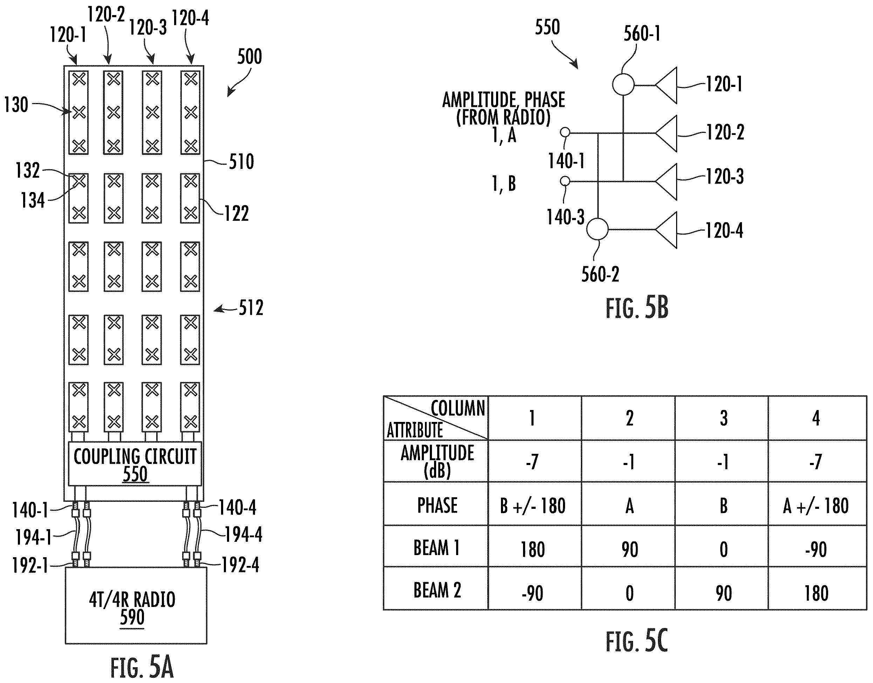

**FIG. 5A** is a schematic front view of an antenna system **500** according to embodiments of the present invention that includes a 4T4R radio **590,** a coupling circuit **550,** and an antenna **510** having an antenna array **512** that includes four columns **120** of dual-polarized radiating elements **130.**

**FIG. 5B** is a schematic diagram illustrating a coupling circuit **550** according to embodiments of the present invention that can be used to couple the 4T4R radio **590** of **FIG. 5A** to the four-column antenna array of **FIG. 5A****.** The coupling circuit **550** may include two couplers **560-1** and **560-2.** Each of the couplers and/or splitters **560** may electrically connect a respective radio signal port **192** of the radio **590** (via a respective antenna signal port **140** of the antenna **510)** to a pair of columns **120.**

The first coupler and/or splitter **560-1** connects the first antenna signal port **140-1** to both the first column **120-1** and the third column **120-3.** Similarly, the second coupler and/or splitter **560-2** connects the third antenna signal port **140-3** both the second column **120-2** and the fourth column **120-4.** Accordingly, each commonly-coupled pair of columns **120** may be a non-adjacent pair having one column **120** therebetween. The antenna signal ports **140-1** and **140-3** may be first polarization antenna signal ports. For simplicity of illustration, the second polarization antenna signal ports **140-2** and **140-4** are omitted from view in **FIG. 5B****.** An identical circuit including two additional couplers and/or splitters **560** may be used to couple the second polarization antenna signal ports **140-2** and **140-4** to the second polarization radiators **134** of the radiating elements **130** in antenna array **512.**

In some embodiments, the orientation of the hook baluns on the dipole radiators **132, 134** of the radiating elements **130** included in columns **120-1** and **120-4** may be reversed as compared to the orientation of the hook baluns on the dipole radiators **132, 134** of the radiating elements **130** included in columns **120-2** and **120-3** in order to implement the phase shifts between the signals fed to various of the columns **120.** Moreover, the columns **120** may be spaced apart from each other by at least 58 mm.

**FIG. 5C** is a table illustrating the relative amplitudes and phases applied to the signals fed to the four columns of the antenna array of **FIG. 5A** via the coupling circuit that is shown in **FIG. 5B** in order generate four antenna beams (two at each polarization)

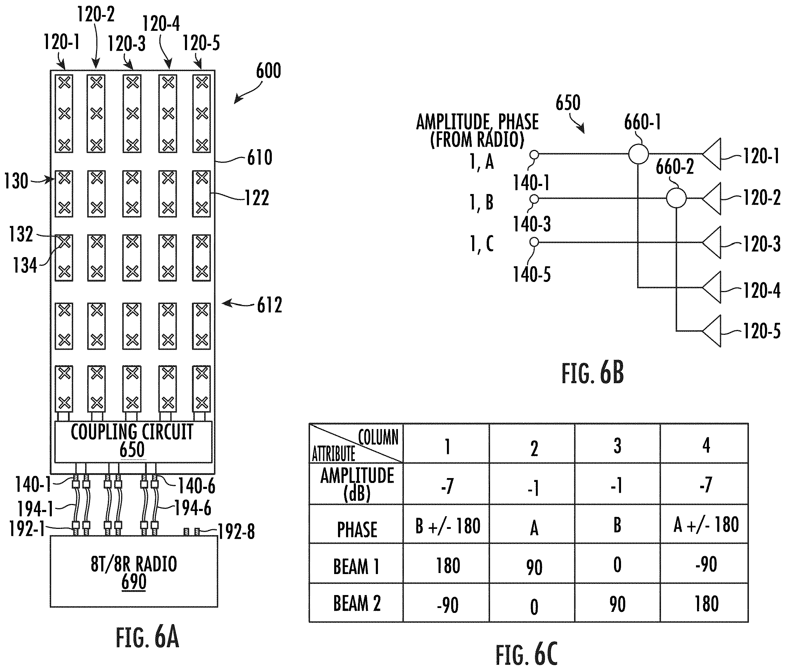

**FIG. 6A** is a schematic front view of an antenna system **600** according to embodiments of the present invention that includes a 8T8R radio **690,** a coupling circuit **650,** and an antenna **610** having an antenna array **612** that includes five columns **120** of dual-polarized radiating elements **130.**

**FIG. 6B** is a schematic diagram illustrating a coupling circuit **650** according to embodiments of the present invention that can be used to couple the 8T8R radio **690** of **FIG. 6A** (with two radio signal ports **192** unused) to the five-column antenna array of **FIG. 6A****.** The coupling circuit **650** may include two couplers and/or splitters **660-1** and **660-2.** Each of the couplers and/or splitters **660** may electrically connect a respective radio signal port **192** (via a respective antenna signal port **140** of the antenna **610)** to a pair of columns **120.**

The first coupler and/or splitter **660-1** connects the first antenna signal port **140-1** to both the first column **120-1** and the fourth column **120-4.** Similarly, the second coupler and/or splitter **660-2** connects the third antenna signal port **140-3** to both the second column **120-2** and the fifth column **120-5.** Accordingly, each commonly-coupled pair of columns **120** may be a non-adjacent pair having two columns **120** therebetween.

Column **120-3** may, in some embodiments, be the only column **120** that is coupled to the fifth antenna signal port **140-5.** Antenna signal ports **140-1, 140-3,** and **140-5,** may be first polarization antenna signal ports. For simplicity of illustration, second polarization antenna signal ports **140-2, 140-4,** and **140-6** are omitted from view in **FIG. 6B****.** An identical circuit including two additional couplers and/or splitters **660** may be used to couple the second polarization antenna signal ports **140-2, 140-4** and **140-6** to the second polarization radiators **134** of the radiating elements **130** in antenna array **612.** As shown in **FIG. 6A****,** the beamforming radio **690** includes seventh and eighth radio signal ports **192-7** and **192-8** that are not coupled to the antenna **610** and instead are unused.

**FIG. 6C** is a table illustrating the relative amplitudes and phases applied to the signals fed to the five columns of the antenna array of **FIG. 6A** via the coupling circuit that is shown in **FIG. 6B** in order generate the four antenna beams (two at each polarization).

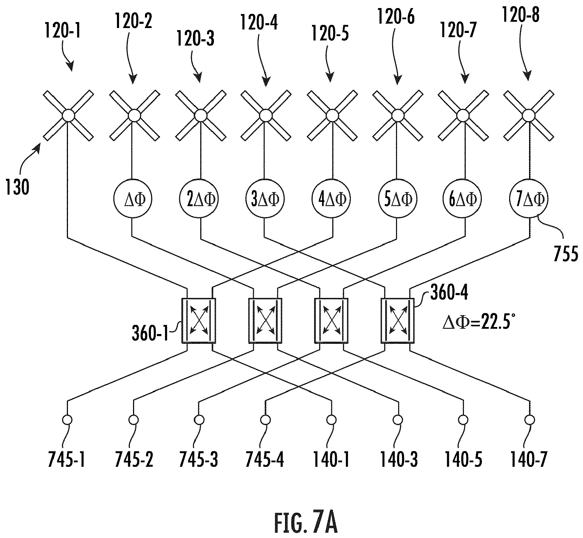

**FIG. 7A** is a schematic block diagram of an example implementation of the antenna array **312** and coupling circuit **350** of the antenna system **300** of **FIGS. 3A** and **3B** (illustrating one polarization only). In particular, **FIG. 7A** shows that each coupler and/or splitter **360** of the coupling circuit **350** may be a four-port hybrid coupler having (i) an RF input port that is coupled to a respective antenna signal port **140 (****FIG. 3A****)** and thus to a respective radio signal port **192 (****FIG. 3A****),** (ii) a first RF output port that is coupled to one of the columns **120,** (iii) a second RF output port that is coupled to another of the columns **120,** and (iv) an isolation port that is coupled to a resistive termination **745** (e.g., a 50-Ohm resistor). For simplicity of illustration, only one radiating element **130** is shown per column **120.**

In some embodiments, analog RF circuitry may provide a phase adjustment to a signal that is output from a coupler and/or splitter **360** before it reaches a column **120.** For example, respective phase-adjustment components **755** may be coupled to the columns **120.** As an example, the phase-adjustment components **755** may be delay lines or other phase shifting elements.

**FIG. 7B** is a schematic block diagram illustrating how the signal sources of an 8T8R radio may be coupled to the antenna array and coupling circuit of **FIG. 7A****.** For simplicity of illustration, the interface between the radio **290** and the antenna **310 (****FIG. 3A****)** is represented in **FIG. 7B** by only the four first polarization antenna signal ports **140-1, 140-3, 140-5,** and **140-7.** As shown in more detail in **FIG. 3A****,** the first polarization antenna signal ports **140-1, 140-3, 140-5,** and **140-7** are coupled to respective first polarization radio signal ports **192-1, 192-3, 192-5,** and **192-7** of the radio **290.** Each radio signal port **192** may be coupled between a respective combiner **735** and a respective antenna signal port **140.** For simplicity of illustration, however, only radio signal port **192-7** is shown in **FIG. 7B****.** A circuit identical to the circuit shown in **FIG. 7B** also exists for the second polarization.

The radio **290** includes four first polarization RF signal sources **715.** Each signal source **715** is configured to generate four different RF signal components **716** that the radio **290** provides to different respective ports **192.** For example, the radio **290** may include RF combiners **735** that each combine four signal components **716** from respective signal sources **715** and output the resulting combined signal to a radio signal port **192.** Accordingly, each first polarization signal source **715** may be coupled to all of the first polarization radio signal ports **192,** and may simultaneously generate signal components **716** for four antenna beams. Moreover, the radio **290** may be configured to individually adjust each signal component **716.** As an example, the radio **290** may include phase-adjustment components **725** that are between the signal sources **715** and the combiners **735,** or may otherwise generate RF components having different phases, as shown in **FIG. 7B****.**

In some embodiments, functionality of the phase-adjustment components **725** and/or the combiners **735** may be provided by the radio **290** in the digital domain rather than using analog RF components. Moreover, the radio **290** can control each of the signal sources **715** to individually turn on or off an antenna beam. For example, the radio **290** can do so by controlling the signal sources **715** to individually turn on or off any of the signal components **716.**

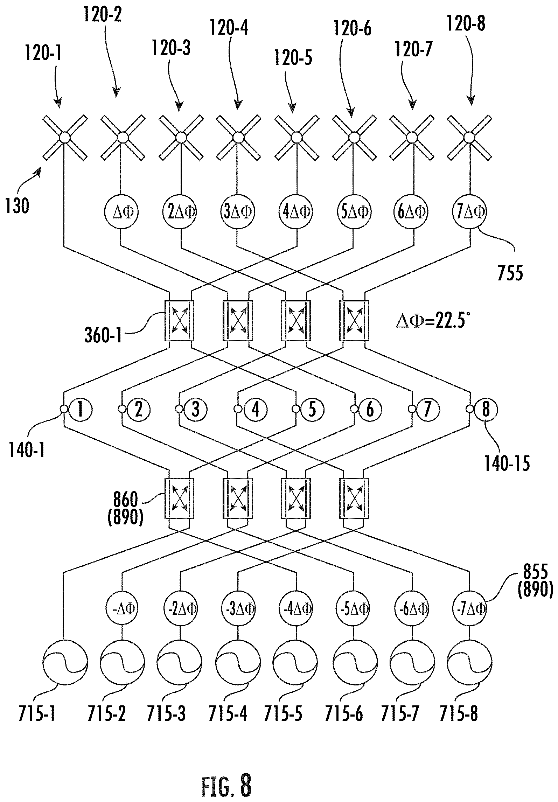

**FIG. 8** is a schematic diagram of an antenna system according to embodiments of the present invention. The system may include a 16T16R radio **890**. The radio **890** may include eight RF signal sources **715** per polarization. Moreover, the radio **890** may include phase-adjustment components **855** that mirror analog phase-adjustment components **755** that are between the columns **120** and the couplers and/or splitters **360**. The radio **890** may also include couplers and/or splitters **860** that mirror the couplers and/or splitters **360.** In some embodiments, the radio **890** may provide functionality of the couplers and/or splitters **860** and the phase-adjustment components **855** in the digital domain rather than using analog RF components. Accordingly, the radio **890** may compensate for analog RF circuitry, such as the couplers and/or splitters **360** and the phase-adjustment components **755,** that feeds the columns **120** by digitally mirroring the analog RF circuitry. Such digital mirroring may be less expensive than analog mirroring (i.e., additional hardware) inside the radio **890.**

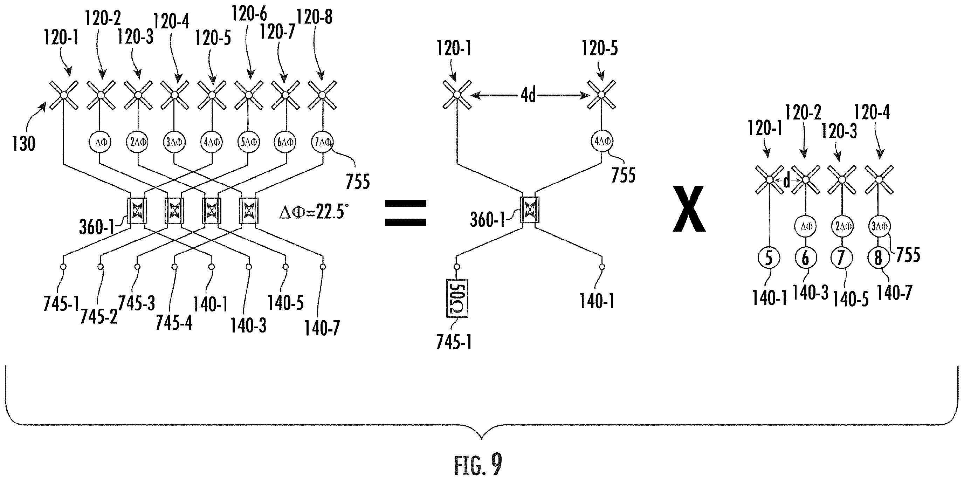

**FIG. 9** is a schematic diagram illustrating how the antenna systems according to embodiments of the present invention may be viewed as including a plurality of multi-column sub-arrays. As shown in **FIG. 9****,** adjacent columns **120** may be spaced apart from each other (center-to-center) by a distance d. Accordingly, a pair of columns **120-1** and **120-5** that are commonly-fed by a coupler and/or splitter **360-1** and have three columns **120** therebetween may be spaced apart by a distance 4d. This commonly-fed pair may be considered a two-column **120** sub-array. In aggregate, the antenna system may thus have four two-column **120** sub-arrays.

Antenna systems according to embodiments of the present invention can generate any multiple antenna beams, which may be defined by the distance 4d. This example is 4 times a half wavelength, so it is for four antenna beams.

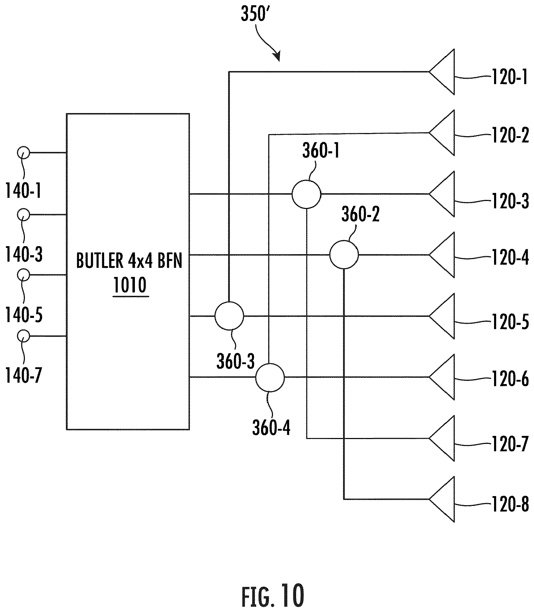

**FIG. 10** is a schematic diagram illustrating a Butler Matrix beamforming network ("BFN") **1010** that is connected to the coupling circuit **350'** of **FIG. 3D****.** The BFN **1010** is configured to generate progressive phase (e.g., -157.5, +67.5, -67.5, and +157.5, for different columns **120)** that creates antenna beams. Moreover, the coupling circuit **350'** is provided merely as an example, and any coupling circuit herein may be connected to a Butler Matrix BFN. As shown in **FIG. 10****,** the BFN **1010** is a 4x4 (four ports connected to four radios) BFN that is connected between the coupling circuit **350'** and ports **140-1, 140-3, 140-5,** and **140-7** of antenna **310 (****FIG. 3A****).** Accordingly, the BFN **1010** may, in some embodiments, be an analog circuit that is inside the antenna **310.** In other embodiments, matrix manipulation that the BFN **1010** is configured to perform may instead be performed digitally by the radio **290 (****FIG. 3A****).**

As a result of using the BFN **1010** for beamforming, each of the 4 ports **140** of a given polarization may be connected to all (e.g., all 8) columns **120.** For simplicity of illustration, only one polarization is shown in **FIG. 10****.** The same BFN **1010,** however, may be connected to couplers and/or splitters **360** of both polarizations.

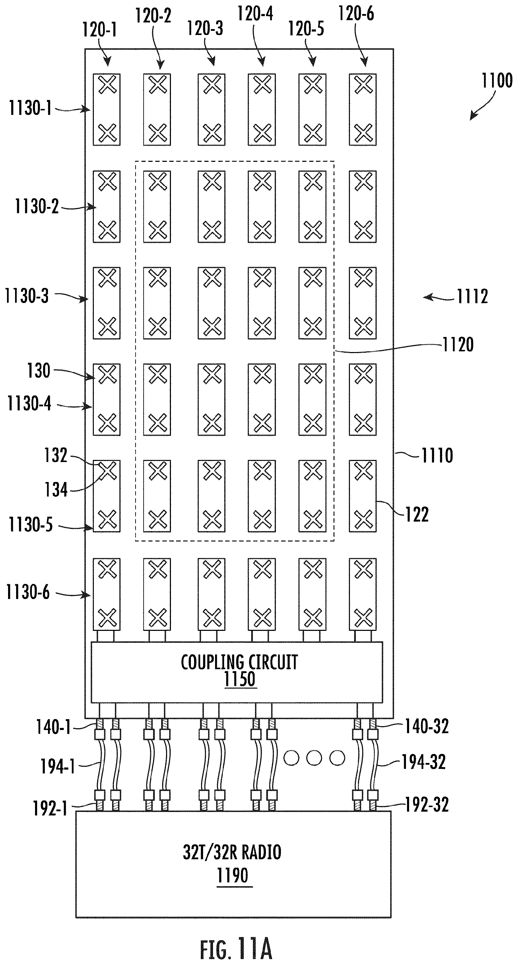

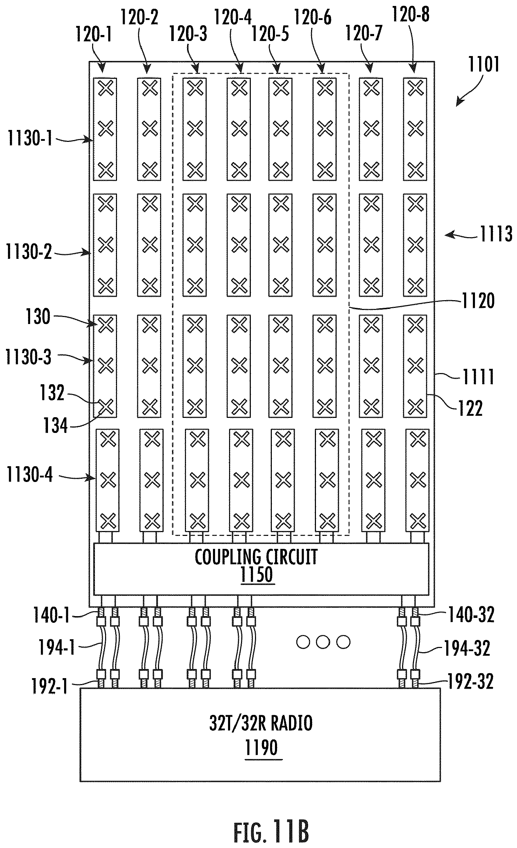

**FIGS. 11A** and **11B** are schematic front views of massive MIMO antenna systems according to embodiments of the present invention. As shown in **FIG. 11A****,** antenna system **1100** according to embodiments of the present invention includes a 32T32R beamforming radio **1190,** a coupling circuit **1150,** and an antenna **1110** having an antenna array **1112** that includes six columns **120-1** through **120-6** and six rows **1130-1** through **1130-6** of dual-polarized radiating elements **130.** The radio **1190** includes thirty-two radio signal ports **192-1** through **192-32.** In some embodiments, all thirty-two ports **192** (i.e., sixteen ports **192** per polarization) are coupled to the antenna array **1112** through the coupling circuit **1150.**

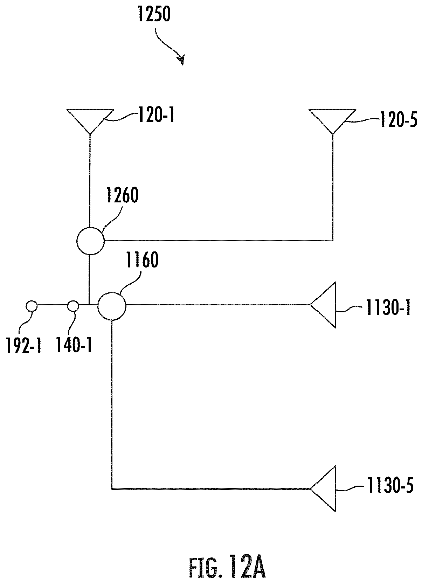

As schematically illustrated in **FIG. 11A****,** the coupling circuit **1150** may include a plurality of couplers and/or splitters (e.g., power dividers) **1160 (****FIG. 12A****)** that are coupled to multiple rows **1130,** thereby providing a significant cost saving by facilitating the use of the radio **1190** rather than a 64T64R radio, which would have sixty-four radio signal ports. Each radio signal port **192** of the radio **1190** may thus be shared by multiple rows **1130** instead of (or in addition to) being shared by multiple columns **120.** Accordingly, while other examples herein discuss columns **120** that share an RF signal that is output by a single port **192,** each port **192** in those examples that outputs an RF signal may additionally or alternatively be coupled to multiple rows **1130.** To reduce the complexity of the feeding network (e.g., the coupling circuit **1150)** for the antenna array **1112,** only multiple rows **1130** or only multiple columns **120** (rather than both) may, in some embodiments, be coupled to each port **192.**

As used herein, the term "row" refers to a row of groups **122** of radiating elements **130,** where each group **122** may include at least two radiating elements **130.** Each group **122** is part of a column **120,** and thus may be referred to herein as a "sub-column." Moreover, some groups **122** may, in some embodiments, be in a sub-array **1120** of (e.g., a set of sixteen) groups **122** that share ports **192** of the radio **1190** with other groups **122** that are outside of the sub-array **1120.** For example, (i) a group **122** that is outside of the sub-array **1120** in row **1130-1** and (ii) another group **122** that is inside the sub-array **1120** in row **1130-5** (and in, e.g., column **120-5)** may be coupled to the radio **1190** by the same coupler and/or splitter **1160** of the coupling circuit **1150.** Additional couplers and/or splitters **1160** of the coupling circuit **1150** may couple additional pairs of the groups **122** to the radio **1190.**

In some embodiments, the antenna array **1112** may be expanded to include more rows **1130** and/or more columns **120** while still using the radio **1190.** For example, adding two rows **1130** (for a total of eight) may increase the vertical gain of the antenna array **1112.** As another example, adding two columns **120** (for a total of eight) may increase the azimuth gain of the antenna array **1112.** On the other hand, using a total of six rows **1130** and six columns **120** can maintain a small size and low cost of the antenna array **1112** relative to expanded variants thereof. Accordingly, the antenna array **1112** may have at least six rows **1130** and at least six columns **120,** with performance, size, and cost tradeoffs based on whether the number is six, seven, or eight.

Though the antenna array **1112** is shown as having seventy-two radiating elements **130,** adding rows **1130** and/or columns **120** to the antenna array **1112** may increase the number of radiating elements **130** to, for example, ninety-six or one hundred twenty-eight. The antenna array **1112** may thus have at least seventy-two radiating elements **130** that are fed by ports **192** of the radio **1190.**

Referring to **FIG. 11B****,** antenna system **1101** according to embodiments of the present invention includes a 32T32R radio **1190,** a coupling circuit **1150,** and an antenna **1111** having an antenna array **1113** that includes eight columns **120-1** through **120-8** and four rows **1130-1** through **1130-4** of dual-polarized radiating elements **130.** In particular, each group **122** in **FIG. 11B** includes exactly three radiating elements **130,** whereas each group **122** in **FIG. 11A** includes exactly two radiating elements **130.** Though the arrays **1112 (****FIG. 11A****)** and **1113** may each have the same total number of radiating elements **130,** the array **1112** may provide a better radiation pattern, due to its additional rows **1130.**

**FIG. 12A** is a schematic diagram illustrating a coupling circuit **1250** according to embodiments of the present invention that can be used to couple a first polarization radio signal port **192-1** of the 32T32R radio **1190** of **FIG. 11A** to multiple rows **1130** and multiple columns **120** of the antenna array **1112** of **FIG. 11A****.** In particular, **FIG. 12A** illustrates an example in which the port **192-1** is coupled to rows **1130-1** and **1130-5** by a coupler and/or splitter **1160,** and is coupled to columns **120-1** and **120-5** by another coupler and/or splitter **1260.** For simplicity of illustration, only one port **192-1** of one polarization of the 32T32R radio **1190** is shown in **FIG. 12A****.** The coupling circuit **1250,** however, may include additional couplers and/or splitters **1160** and **1260** that couple other first polarization radio signal ports **192** (e.g., ports **192-3, 192-5,** etc.) to the array **1112.** An identical coupling circuit **1250** may be used to couple the second polarization radio signal ports **192-2, 192-4,** etc. to the columns **120** and rows **1130** of antenna array **1112.** The coupling circuit **1250** may thus replace, or be a part of, another coupling circuit described herein, such as the coupling circuit **1150** of **FIG. 11A****.**

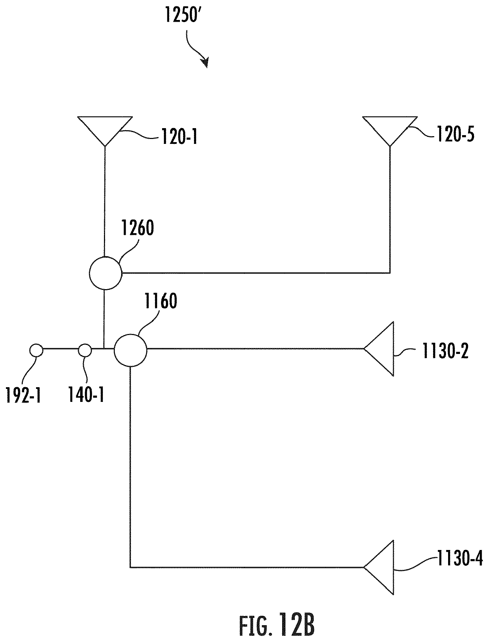

**FIG. 12B** is a schematic diagram illustrating a coupling circuit **1250'** according to embodiments of the present invention that can be used to couple a first polarization radio signal port **192-1** of the 32T32R **1190** radio of **FIG. 11B** to multiple rows **1130** and multiple columns **120** of the antenna array **1113** of **FIG. 11B****.** In particular, **FIG. 12B** illustrates an example in which the port **192-1** is coupled to rows **1130-2** and **1130-4** by a coupler and/or splitter **1160,** and is coupled to columns **120-1** and **120-5** by another coupler and/or splitter **1260.** For simplicity of illustration, only one port **192-1** of one polarization of the 32T32R radio **1190** is shown in **FIG. 12A****.** The coupling circuit **1250',** however, may include additional couplers and/or splitters **1160** and **1260** that couple other first polarization radio signal ports **192** (e.g., ports **192-3, 192-5,** etc.) to the array **1113.** An identical coupling circuit **1250'** may be used to couple the second polarization radio signal ports **192-2, 192-4,** etc. to the columns **120** and rows **1130** of antenna array **1113.** The coupling circuit **1250'** may thus replace, or be a part of, another coupling circuit described herein, such as the coupling circuit **1150** of **FIG. 11B****.**

The coupling circuits **1250, 1250'** allow application of a flexible beam in both horizontal and vertical planes. Accordingly, performance of an antenna array that is coupled to a 32T32R radio (e.g., the radio **1190)** by the coupling circuit **1250** (or the coupling circuit **1250')** may be comparable to performance provided by an antenna array that is coupled to a 64T64R radio without the coupling circuit **1250** (or the coupling circuit **1250')** therebetween.

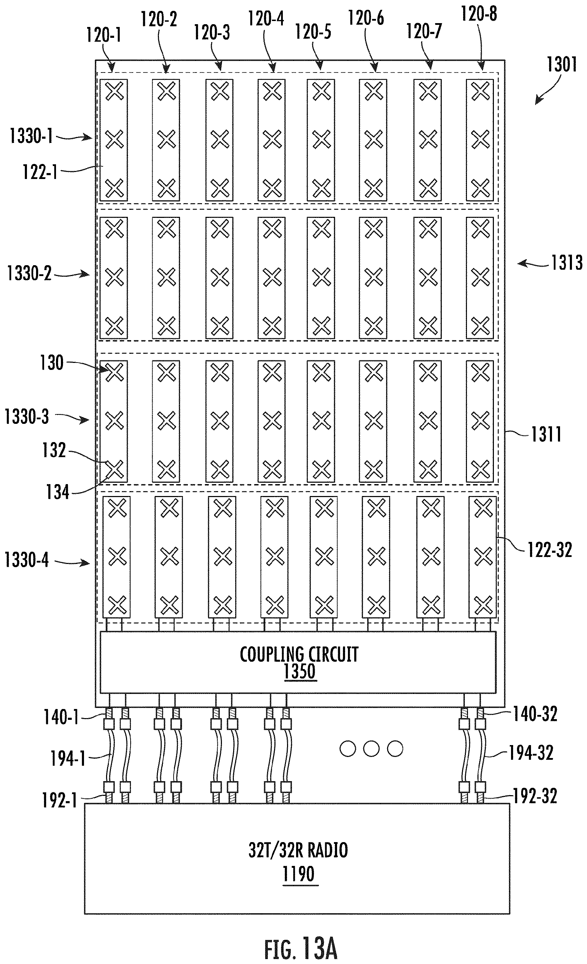

**FIG. 13A** is a schematic front view of a massive MIMO antenna system **1301** having four rows **1330-1** through **1330-4** according to embodiments of the present invention. The system **1301** includes a 32T32R radio **1190,** a coupling circuit **1350,** and an antenna **1311** having an antenna array **1313** that includes eight columns **120-1** through **120-8** and the four rows **1330-1** through **1330-4** of dual-polarized radiating elements **130.** In particular, each row **1330** in **FIG. 13A** includes eight sub-columns **122** of exactly three radiating elements **130** each. Each row **1330** is thus a sub-array comprising twenty-four radiating elements **130.** The four sub-arrays (i.e., the four rows **1330-1** through **1330-4)** are in a vertical stack such that they do not overlap each other in a horizontal direction. Moreover, each column **120** includes four sub-columns **122** that may not be coupled to each other by the coupling circuit **1350.** Rather, the coupling circuit **1350** may couple together only sub-columns **122** that are in the same row **1330.**

The 32T32R radio **1190** has thirty-two radio signal ports **192-1** through **192-32** that are coupled to thirty-two antenna signal ports **140-1** through **140-32,** respectively, of the antenna **1301** through thirty-two RF transmission lines **194-1** through **194-32,** respectively. Moreover, each sub-column **122** of radiating elements **130** in a row **1330** is coupled to another sub-column **122** in the row **1330.** Specifically, each radio signal port **192** is coupled to a pair of the sub-columns **122** through the coupling circuit **1350.** Each radio signal port **192** may thus be coupled to exactly six of the radiating elements **130.**

As shown in **FIG. 13A****,** each row **1330** may, in some embodiments, have the same number of radiating elements **130.** In other embodiments, different rows **1330** may have different numbers of radiating elements **130.** For example, some rows **1330** may have exactly one or exactly two radiating elements **130** in each sub-column **122** and other rows **1330** may have exactly three radiating elements **130** in each sub-column **122.** Moreover, the columns **120** may, in some embodiments, be vertically staggered relative to each other.

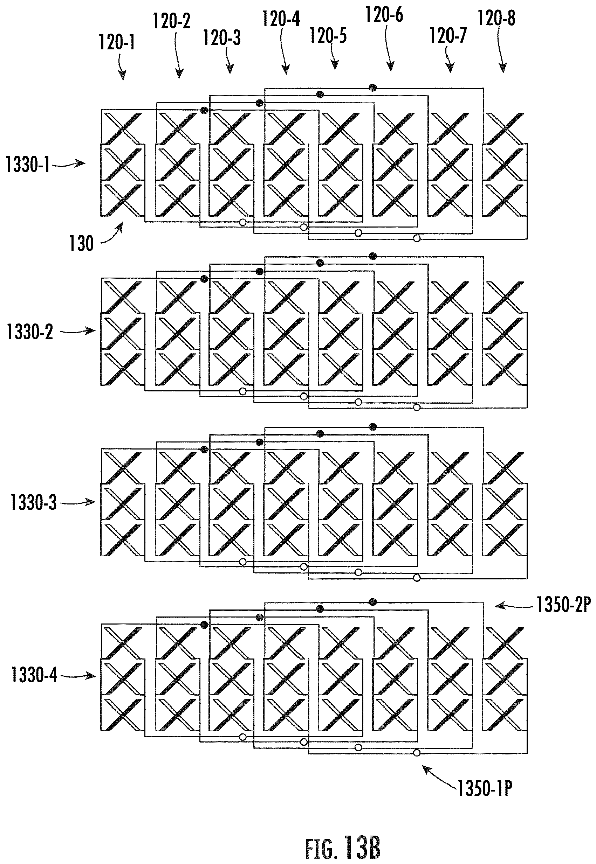

**FIG. 13B** is a schematic diagram illustrating a first-polarization portion **1350-1P** and a second-polarization portion **1350-2P** of the coupling circuit **1350** of **FIG. 13A** coupled to the rows **1330.** The first-polarization portion **1350-1P** and the second-polarization portion **1350-2P** couple each sub-column **122 (****FIG. 13A****)** of three radiating elements **130** in a row **1330** to another sub-column **122** of three radiating elements **130** in that row **1330.** The first-polarization portion **1350-1P** and the second-polarization portion **1350-2P** are thus each coupled to four pairs of the sub-columns **122**. Moreover, as each of the four rows **1330-1** through **1330-4** is coupled to a respective first-polarization portion **1350-1P** and a respective second-polarization portion **1350-2P,** a total of sixteen pairs of the sub-columns **122** are coupled together by the coupling circuit **1350.** Accordingly, the coupling circuit **1350** may be coupled to thirty-two sub-columns **122-1** through **122-32.**

Because different rows **1330** can have different amplitudes/phases in relation to each other for beam-shaping purposes (e.g., digital beamforming), each row **1330** may be referred to herein as a "phase-adjustable row." The phase-adjustable rows enable beam steering in the elevation plane.

Moreover, radiation patterns of the phase-adjustable rows can be digitally combined with baseband. For example, each phase-adjustable row may have a certain radiation pattern in the far-field. As an example, the radiation patterns of the four (per polarization) radio signal ports **192** coupled to the row **1330-1** can be combined digitally, thereby "constructing" the phase-adjustable row radiation pattern of the row **1330-1.** Multiple (i.e., at least two) phase-adjustable row patterns of different rows **1330** can be further combined, thereby constructing a whole-array (e.g., for an 8x12 array) radiation pattern.

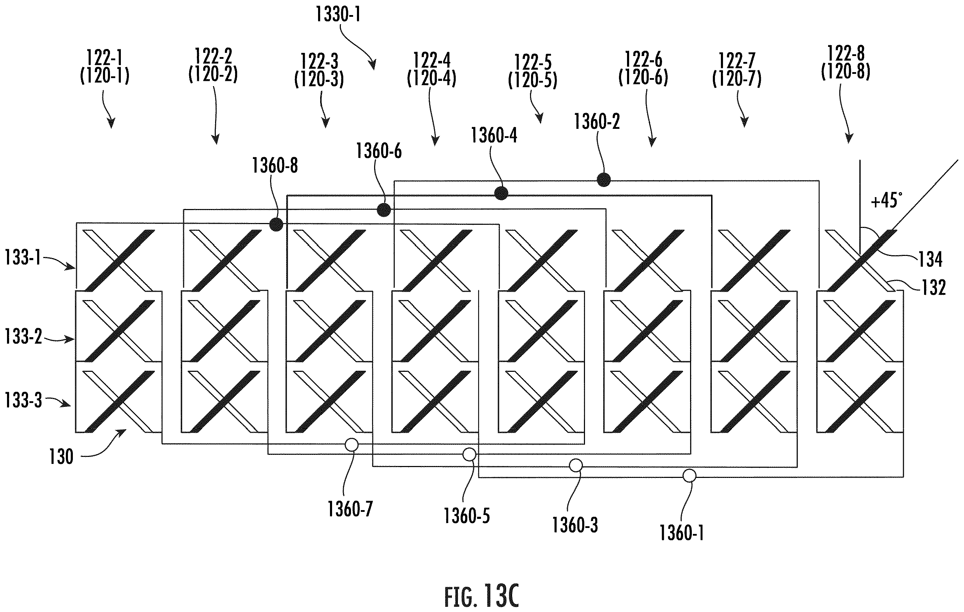

**FIG. 13C** is an enlarged schematic diagram illustrating a first row **1330-1** of the rows **1330** of **FIG. 13A****.** As shown in **FIG. 13C****,** the row **1330-1** is coupled to four coupling elements **1360** per polarization. The coupling elements **1360** may comprise phase shifters, couplers, and/or splitters (e.g., power dividers). Four first-polarization coupling elements **1360-1, 1360-3, 1360-5,** and **1360-7** may be part of the first-polarization portion **1350-1P (****FIG. 13B****)** of the coupling circuit **1350 (****FIG. 13A****).** Likewise, four second-polarization coupling elements **1360-2, 1360-4, 1360-6,** and **1360-8** may be part of the second-polarization portion **1350-2P (****FIG. 13B****)** of the coupling circuit **1350.**

The row **1330-1** comprises three vertically-stacked sub-rows **133-1** through **133-3,** each of which includes eight radiating elements **130** that are arranged in a horizontal direction. Each sub-column **122** (among eight sub-columns **122-1** through **122-8** that are in respective columns **120-1** through **120-8)** includes a single radiating element **130** from each of the sub-rows **133-1** through **133-3.** Moreover, each coupling element **1360** is coupled to two radiating elements **130** from each of the sub-rows **133-1** through **133-3.** In some embodiments, center-to-center spacing between adjacent sub-rows **133** is about 58 mm, and center-to-center spacing between adjacent sub-columns **122** is about 41 mm.

**FIG. 13C** also shows that each radiating element **130** in the row **1330-1** may have -45° and +45° slant polarizations. For example, the dipole radiators **132** and **134** may be slant -45° and +45° radiators, respectively, of the radiating elements **130.** The first-polarization coupling elements **1360-1, 1360-3, 1360-5,** and **1360-7** may be coupled to the dipole radiators **132,** and the second-polarization coupling elements **1360-2, 1360-4, 1360-6,** and **1360-8** may be coupled to the dipole radiators **134.**

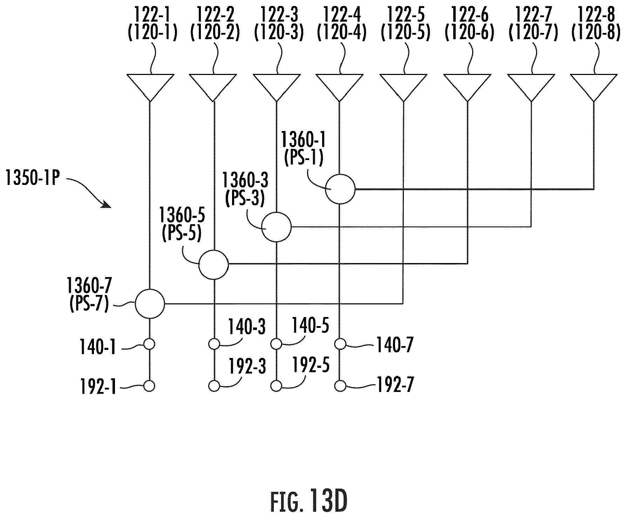

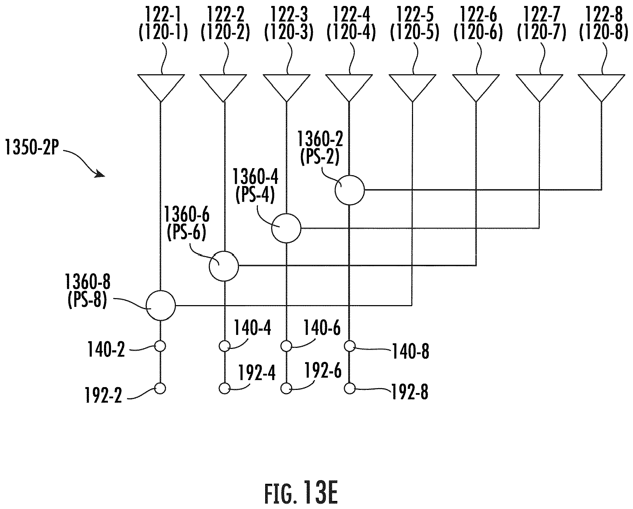

**FIGS. 13D** and **13E** are schematic diagrams illustrating examples in which the coupling circuit **1350** of **FIG. 13A** includes a plurality of coupling elements **1360** per polarization that are coupled between radio signal ports **192** of the 32T32R radio of **FIG. 13A** and multiple sub-columns **122** of the antenna array **1313** of **FIG. 13A****.**

As shown in **FIG. 13D****,** the first-polarization portion **1350-1P** of the coupling circuit **1350** includes the first-polarization coupling elements **1360-1, 1360-3, 1360-5,** and **1360-7**. The coupling element **1360-1** couples the radio signal port **192-7** to the sub-columns **122-4** and **122-8**. The coupling element **1360-3** couples the radio signal port **192-5** to the sub-columns **122-3** and **122-7.** The coupling element **1360-5** couples the radio signal port **192-3** to the sub-columns **122-2** and **122-6.** The coupling element **1360-7** couples the radio signal port **192-1** to the sub-columns **122-1** and **122-5.**

In some embodiments, the coupling elements **1360-1, 1360-3, 1360-5,** and **1360-7** may be first-polarization phase shifters **PS-1, PS-3, PS-5,** and **PS-7,** respectively. Accordingly, each pair of sub-columns **122** can be combined by using a respective phase shifter **PS.** Each phase shifter **PS** may be, for example, a rotary wiper arc phase shifter, which can switch between multiple (e.g., two) beamsteering options. Without a phase shifter **PS,** beams may be steered in only four directions, with null points (which may occur when different radio waves of an antenna cancel each other out) therebetween. By contrast, using a phase shifter **PS** allows a beam to be steered in the azimuth plane to a null point and to provide maximum gain at that angle. As an example, the position of a phase shifter **PS** may be adjusted depending on the phase of a radio signal port **192** that is coupled thereto. Moreover, a phase shifter **PS** can, in some embodiments, help to control side lobes. Example phase shifters are discussed in U.S. Patent No. 7,907,096, the disclosure of which is hereby incorporated herein by reference in its entirety.

Merely adjusting phasing of the radio **1190 (****FIG. 13A****)** cannot cover null points. Phases of phase shifters **PS,** however, can be adjusted to cover the null points. In some embodiments, a beamforming system that controls remote electrical tilt ("RET") can automatically determine phase shifter **PS** phases. In other embodiments, a user can manually input phase shifter **PS** phases.

As shown in **FIG. 13E****,** the second-polarization portion **1350-2P** of the coupling circuit **1350** includes the second-polarization coupling elements **1360-2, 1360-4, 1360-6,** and **1360-8**. The coupling element **1360-2** couples the radio signal port **192-8** to the sub-columns **122-4** and **122-8**. The coupling element **1360-4** couples the radio signal port **192-6** to the sub-columns **122-3** and **122-7.** The coupling element **1360-6** couples the radio signal port **192-4** to the sub-columns **122-2** and **122-6.** The coupling element **1360-8** couples the radio signal port **192-2** to the sub-columns **122-1** and **122-5**. Moreover, the coupling elements **1360-2, 1360-4, 1360-6,** and **1360-8** may, in some embodiments, be second-polarization phase shifters **PS-2, PS-4, PS-6,** and **PS-8,** respectively.

For simplicity of illustration, coupling elements **1360-1** through **1360-8** are shown in **FIGS. 13C-13E** for only the first row **1330-1 (****FIG. 13C****)** of the rows **1330 (****FIG. 13B****).** It will be understood, however, that each row **1330** may be coupled to four coupling elements **1360** (and thus four radio signal ports **192)** per polarization. For example, eight sub-columns **122-9** through **120-16 (****FIG. 13A****)** of a second row **1330-2 (****FIG. 13B****)** may be coupled to first-polarization radio signal ports **192-9, 192-11, 192-13,** and **192-15 (****FIG. 13A****)** via four first-polarization coupling elements **1360** in a manner analogous to what is shown in **FIG. 13D** for the first row **1330-1.** Likewise, the eight sub-columns **122-9** through **122-16** of the second row **1330-2** may be coupled to second-polarization radio signal ports **192-10, 192-12, 192-14,** and **192-16 (****FIG. 13A****)** via four second-polarization coupling elements **1360** in a manner analogous to what is shown in **FIG. 13E** for the first row **1330-1**. A third row 1330-**3 (****FIG. 13B****)** comprising eight sub-columns **122-17** through **122-24** may be analogously coupled to first-polarization radio signal ports **192-17, 192-19, 192-21,** and **192-23 (****FIG. 13A****)** and to second-polarization radio signal ports **192-18, 192-20, 192-22,** and **192-24 (****FIG. 13A**). And a fourth row **1330-4 (****FIG. 13B****)** comprising eight sub-columns **122-25** through **122-32** may be analogously coupled to first-polarization radio signal ports **192-25, 192-27, 192-29,** and **192-31 (****FIG. 13A****)** and to second-polarization radio signal ports **192-26, 192-28, 192-30,** and **192-32 (****FIG. 13A**).

Relative to a conventional 64T64R antenna system, the antenna system **1301 (****FIG. 13A****)** may result in only a small performance degradation in the azimuth plane despite having half as many radio signal ports **192.** Moreover, because each column **120** is coupled to four radio signal ports **192** (one radio signal port **192** per sub-column **122** in each column **120)** per polarization in the elevation plane, the system **1301** can provide full beamforming in the elevation plane.

In some embodiments, each first-polarization radio signal port **192** in a row **1330** may have an equal share of power distribution that it provides to a pair of sub-columns **122**. Likewise, each second-polarization radio signal port **192** in a row **1330** may have an equal share of power distribution that it provides to a pair of sub-columns **122.** For example, power may be split equally (25% each) between the first-polarization radio signal ports **192-1, 192-3, 192-5,** and **192-7** shown in **FIG. 13D****,** and may be split equally (25% each) between the second-polarization radio signal ports **192-2, 192-4, 192-6,** and **192-8** shown **in** **FIG. 13E**. As a result, full power from the radio **1190 (****FIG. 13A****)** may be transmitted to the air. By contrast, in a conventional massive MIMO antenna system having columns that are fed by respective radio signal ports per polarization, outer columns of radiating elements may lose power due to amplitude taper and/or bad side lobes.

Moreover, phases of the radio signal ports **192** may vary based on the azimuth steering angle. For example, with an azimuth steering angle of 41.8°, the radio signal ports **192-1** and **192-7** may have phases of 157.5° and -157.5°, respectively, and the radio signal ports **192-3** and **192-5** may have phases of -67.5° and 67.5°, respectively. As another example, with an azimuth steering angle of -13°, the radio signal ports **192-1** and **192-7** may have phases of -67.5° and 67.5°, respectively, and the radio signal ports **192-3** and **192-5** may have phases of -22.5° and 22.5°, respectively. The total phase for a beam in the azimuth plane includes (a) the phase of the radio signal port **192,** (b) fixed feed network phasing, and (c) phase shifter **PS (****FIGS. 13D** and **13E****)** phasing (if any).

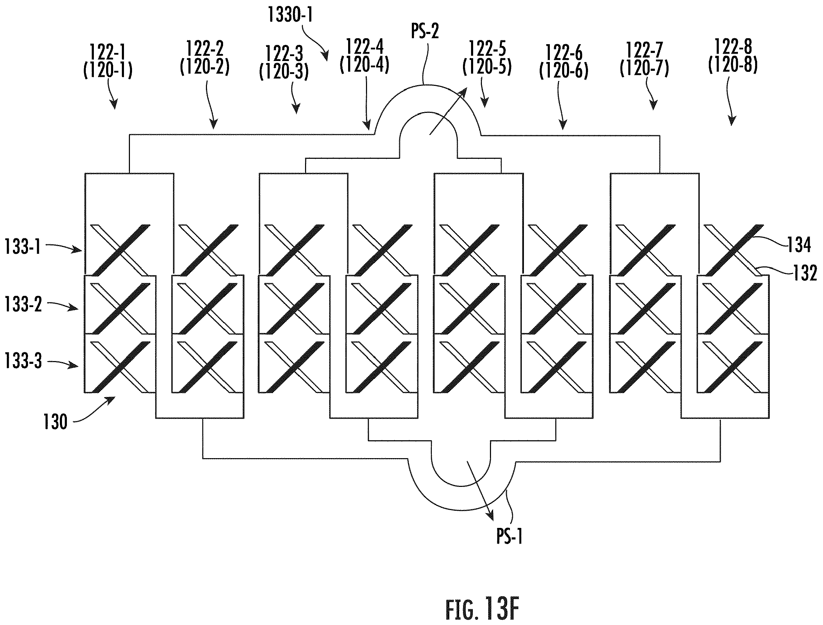

**FIG. 13F** is a schematic diagram illustrating a further example in which the coupling circuit **1350** of **FIG. 13A** includes a single phase shifter **PS** per polarization that is coupled to the first row **1330-1.** A first-polarization phase shifter **PS-1** is coupled to first dipole radiators **132** of each of the eight sub-columns **122-1** through **122-8** that are in the first row **1330-1.** A second-polarization phase shifter **PS-2** is coupled to second dipole radiators **134** of each of the eight sub-columns **122-1** through **122-8.** Unlike what is shown in **FIG. 13D****,** the single phase shifter **PS-1** in **FIG. 13F** may couple a single first-polarization radio signal port **192-1 (****FIG. 13D****)** to all eight of the sub-columns **122-1** through **122-8.** Likewise, unlike what is shown in **FIG. 13E****,** the single phase shifter **PS-2** in **FIG. 13F** may couple a single second-polarization radio signal port **192-2 (****FIG. 13E****)** to all eight of the sub-columns **122-1** through **122-8.**

Using a single phase shifter **PS** per polarization can result in all of the columns **120** having equal power. For example, a 1:2 wiper-type phase shifter **PS** may provide a -3 dB power distribution to both its left and right branches. The use of a single phase shifter **PS** per polarization can be more cost-effective than using multiple phase shifters **PS** per polarization. Though the use of a single phase shifter **PS** per polarization can somewhat limit azimuth beamsteering because only one radio is connected to the columns **120,** full digital beamforming can still be provided in the elevation plane as long as the antenna system includes two or more rows **1330.**

For simplicity of illustration, the second through fourth rows **1330-2** through **1330-4** are omitted from view in **FIG. 13F**. It will be understood, however, that each of the rows **1330 (****FIG. 13A****)** may be coupled to only one radio signal port **192** per polarization by using a single phase shifter **PS** per polarization rather than four phase shifters **PS** per polarization. Accordingly, the four rows **1330-1** through **1330-4** may be coupled to an 8T8R radio **290 (****FIG. 2A****)** instead of the 32T32R radio **1190 (****FIG. 13A****).**

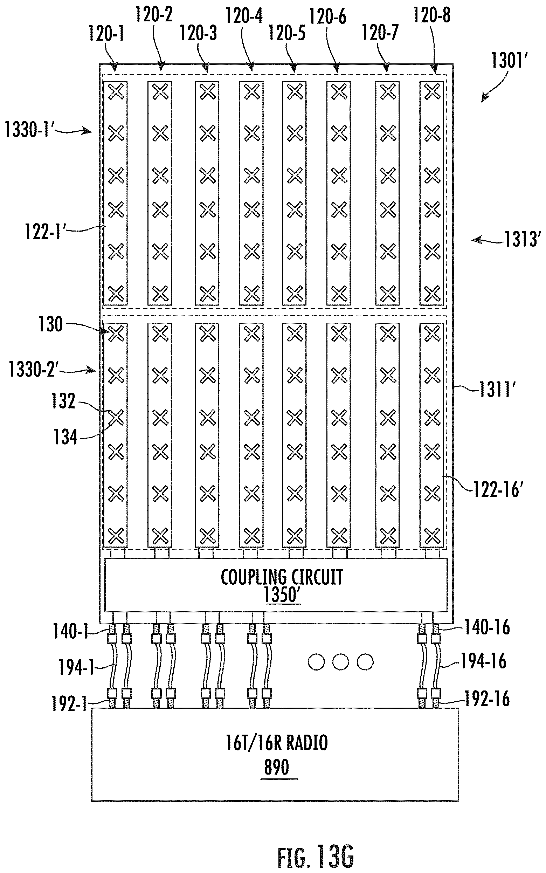

**FIG. 13G** is a schematic front view of a massive MIMO antenna system **1301'** that is modified relative to the antenna system **1301** of **FIG. 13A** to provide a total of two rows **1330-1'** and **1330-2'** instead of four rows **1330-1** through **1330-4.** The system **1301'** includes a 16T16R radio **890,** a coupling circuit **1350',** and an antenna **1311'** having an antenna array **1313'** that includes eight columns **120-1** through **120-8** and the two rows **1330-1'** and **1330-2'** of dual-polarized radiating elements **130.** In particular, the two rows **1330-1'** and **1330-2'** each include eight sub-columns **122'** of exactly six radiating elements **130.** Each of the two rows **1330-1'** and **1330-2'** is thus a sub-array comprising forty-eight radiating elements **130,** where the first row **1330-1'** includes eight sub-columns **122-1'** through **122-8'** and the second row **1330-2'** includes eight sub-columns **122-9'** through **122-16'.** Pairs of the sub-columns **122'** may be coupled to each other by the coupling circuit **1350'** in a manner similar to what is shown in **FIGS. 13D** and **13E****.**

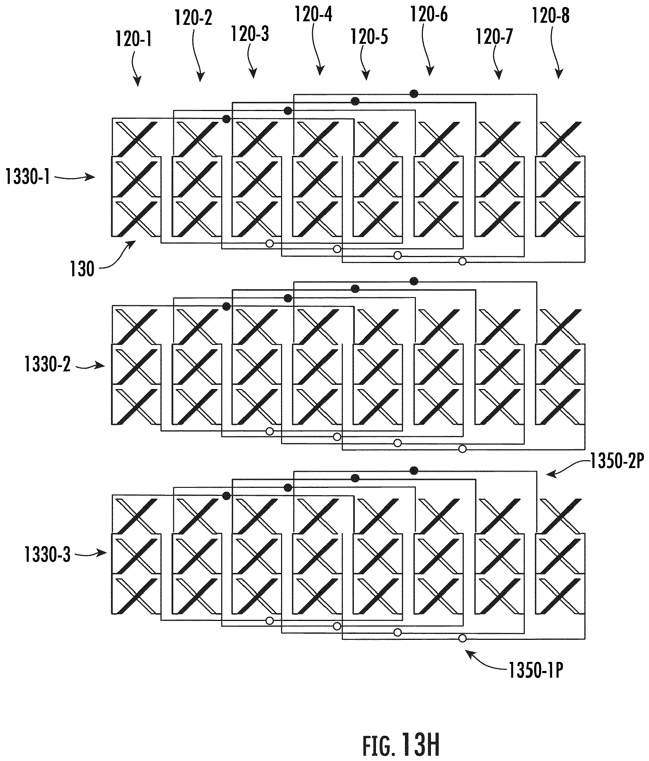

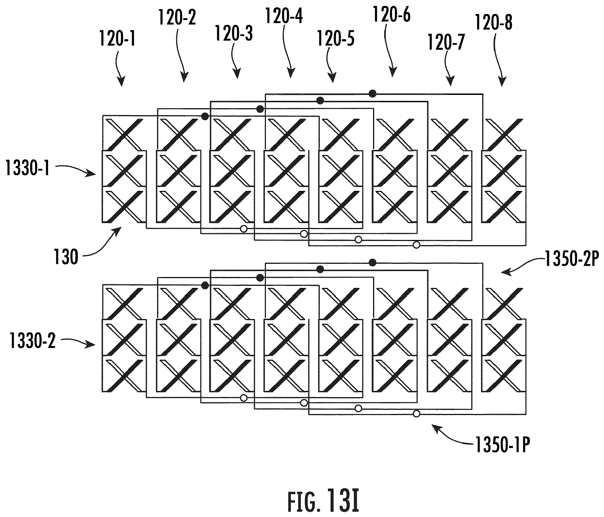

**FIGS. 13H** and **13I** are schematic diagrams that are modified relative to the diagram of **FIG. 13B** to provide totals of three rows **1330-1** through **1330-3** and two rows **1330-1** and **1330-2,** respectively. The antenna system **1301** of **FIG. 13A** can thus be modified to reduce the number of rows **1330.** Eliminating one of the rows **1330** can reduce the number of radio signal ports **192 (****FIG. 13A****),** as well as the number of coupling elements **1360 (****FIG. 13C****),** by eight. Moreover, eliminating two of the rows **1330** can reduce the number of radio signal ports **192** (and the number of coupling elements **1360)** by sixteen.

Each radio signal port **192** that is coupled to one of the three rows **1330-1** through **1330-3** of **FIG. 13H** is, by definition, coupled to one-third of the rows **1330-1** through **1330-3.** Similarly, each radio signal port **192** that is coupled to one of the two rows **1330-1** and **1330-2** of **FIG**. **13I** is, by definition, coupled to half of the rows **1330-1** and **1330-2**. Referring again to **FIG. 13G****,** each radio signal port **192** that is coupled to one of the two rows **1330-1'** and **1330-2'** is, by definition, coupled to half of the rows **1330-1'** and **1330-2'.** Moreover, referring again to **FIGS. 13A-13E****,** each radio signal port **192** that is coupled to one of the four rows **1330-1** through **1330-4** is, by definition, coupled to one-quarter of the rows **1330-1** through **1330-4.** Accordingly, various embodiments provide radio signal ports **192** that are each coupled to at least two columns **120** and no more than half of the rows **1330.**

Referring again to **FIG. 13I**, the two rows **1330-1** and **1330-2** provide a 16T16R design that may have the same (or almost the same) elevation plane beams as a conventional 32T32R design. Moreover, the three rows **1330-1** through **1330-3** of **FIG. 13H** provide a 24T24R design that has better elevation plane steering range/beam shaping compared to the two rows **1330-1** and **1330-2** of **FIG. 13I****.**

Antenna systems that include the rows **1330** shown in **FIGS. 13A** through **13I** can perform digital beamforming in both azimuth and elevation planes. Conventional antenna systems, by contrast, may provide digital beamforming only in the azimuth plane and not in the elevation plane. Antenna systems that include the rows **1330** may have full digital beamsteering capability. In some embodiments, a first portion of beamsteering may be performed digitally and a second portion of beamsteering may be performed by passive Butler matrix hardware (e.g., couplers, power dividers, phase shifters, etc.). According to some embodiments, beamforming may be (i) fully digital in the elevation plane and (ii) a combination of digital and passive in the azimuth plane. In other embodiments, beamforming may be (a) fully digital in the azimuth plane and (b) a combination of digital and passive in the elevation plane.

Moreover, by adding rows **1330,** performance (e.g., beam quality) in the elevation plane can be increased. The rows **1330** may thus be referred to herein as "modular" because rows **1330** can be added or subtracted to provide different levels of MIMO, such as 16T16R (two rows **1330),** 24T24R (three rows **1330),** 32T32R (four rows **1330),** 40T40R (five rows **1330),** or 48T48R (six rows **1330),** with full beamforming. The four-row **1330** (32T32R) design can perform similarly to a conventional 64T64R MIMO product despite having half as many radio signal ports **192.** Moreover, the five-row **1330** (40T40R) design can provide better elevation plane steering range/beam shaping compared to the four-row **1330** design. The six-row **1330** (48T48R) design can, likewise, provide better elevation plane steering range/beam shaping compared to the five-row **1330** design. Modularity can provide flexibility to design antenna systems to meet different performance requirements, such as large gain or low side lobes.

Antenna systems according to embodiments of the present invention may provide a number of advantages. For example, referring to **FIGS. 2A** and **3A****,** analog RF circuitry, such as a coupling circuit **250** or **350,** can allow multiple columns **120** to share an RF signal that is output by a single port **192** of an 8T8R radio **290.** The analog RF circuitry may be inside an antenna **210 (****FIG. 2A****)** or **310** (**FIG. 3A****)** or may be in a standalone device that is coupled between the radio **290** and the antenna **210** or **310.**

By contrast with a conventional antenna **110 (****FIG. 1A****)** that has only four columns **120 (****FIG. 1A****)** coupled to an 8T8R radio **190 (****FIG. 1A****),** the antenna **210** or **310** may have at least six columns **120** that are fed by the 8T8R radio **290** via the analog RF circuitry. The antenna **210** or **310** can thus provide higher gain and higher capacity/throughput than the antenna **110**. As an example, the antenna **210** or **310** can provide significantly better azimuth patterns/directivity than the antenna **110,** and therefore can improve network capacity. An antenna system **200** or **300** having the radio **290** may also be significantly less expensive than a conventional antenna system having a 16T16R radio. In addition to reducing cost, a smaller radio has fewer components, and thus takes up less space, has a lighter weight, and demands less power and cooling.

In some embodiments, beamforming radios are not limited to feeding at least six columns **120.** Rather, as shown in the example of **FIG. 6A****,** an 8T8R radio **690** uses no more than six ports **192** (three per polarization) to feed five columns **120.** As another example, a beamforming radio may use no more than eight ports **192** (four per polarization) to feed five columns **120.** Accordingly, beamforming radios of the present invention may be coupled to at least five columns **120,** where the total number of columns **120** fed by a given beamforming radio may be larger than the radio's total number of ports **192** per polarization that are coupled the columns **120.**

While embodiments of the present invention have been described above with reference to coupling circuits that split RF signals into first and second sub-components and feed these sub-components to first and second columns of radiating elements of an antenna array, it will be appreciated that embodiments of the present invention are not limited thereto. In particular, in other embodiments, 1-to-3, 1-to-4, 1-to-5 couplers and/or splitters and the like may be used to split an RF signal into more than two sub-components and to feed those sub-components to respective columns of an antenna array.

Embodiments of the present invention have been described above with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "on" another element, it can be directly on the other element or intervening elements may also be present. In contrast, when an element is referred to as being "directly on" another element, there are no intervening elements present. It will also be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*i.e.*, "between" versus "directly between", "adjacent" versus "directly adjacent", etc.).

Relative terms such as "below" or "above" or "upper" or "lower" or "horizontal" or "vertical" may be used herein to describe a relationship of one element, layer or region to another element, layer or region as illustrated in the figures. It will be understood that these terms are intended to encompass different orientations of the device in addition to the orientation depicted in the figures.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, operations, elements, and/or components, but do not preclude the presence or addition of one or more other features, operations, elements, components, and/or groups thereof.

Aspects and elements of all of the embodiments disclosed above can be combined in any way and/or combination with aspects or elements of other embodiments to provide a plurality of additional embodiments.

## Claims

1. A base station antenna system comprising:
a beamforming radio having a plurality of radio signal ports; and
an antenna array having a vertical stack of sub-arrays that each comprise a plurality of sub-columns of dual-polarized radiating elements,
wherein a first of the radio signal ports is coupled to two sub-columns of a first of the sub-arrays, and
wherein a second of the radio signal ports is coupled to two sub-columns of a second of the sub-arrays.

2. The base station antenna system of Claim 1, wherein each of the two sub-columns of the first of the sub-arrays comprises three of the dual-polarized radiating elements.

3. The base station antenna system of either Claim 1 or Claim 2, wherein each of the radio signal ports is coupled to six of the dual-polarized radiating elements.

4. The base station antenna system of any one of the Previous Claims, wherein the first and the second of the sub-arrays are each coupled to four of the radio signal ports per polarization.

5. The base station antenna system of any one of the Previous Claims, wherein a third of the radio signal ports is coupled to two sub-columns of a third of the sub-arrays wherein preferably a fourth of the radio signal ports is coupled to two sub-columns of a fourth of the sub-arrays.

6. The base station antenna system of any one of the Previous Claims, wherein each of the two sub-columns of the first of the sub-arrays comprises six of the dual-polarized radiating elements.

7. The base station antenna system of any one of the Previous Claims, further comprising:
a plurality of first phase shifters per polarization that are coupled to the first of the sub-arrays; and
a plurality of second phase shifters per polarization that are coupled to the second of the sub-arrays,
wherein preferably the first of the radio signal ports is coupled to the two sub-columns of the first of the sub-arrays via a first of the first phase shifters, and
wherein the second of the radio signal ports is coupled to the two sub-columns of the second of the sub-arrays via a first of the second phase shifters, and
wherein further preferably the first of the sub-arrays is coupled to four of the first phase shifters per polarization, and
wherein the second of the sub-arrays is coupled to four of the second phase shifters per polarization.

8. The base station antenna system of any one of the Previous Claims, further comprising:
a single first phase shifter per polarization that is coupled to every sub-column of the first of the sub-arrays; and
a single second phase shifter per polarization that is coupled to every sub-column of the second of the sub-arrays.

9. A massive MIMO base station antenna system comprising:
an antenna array having a plurality of radiating elements;
a beamforming radio having fewer than sixty-four radio signal ports that are coupled to the antenna array; and
a coupling circuit that couples a first of the radio signal ports to at least two sub-columns of the radiating elements.

10. The massive MIMO base station antenna system of Claim 9, wherein the beamforming radio comprises a 32T32R beamforming radio.

11. The massive MIMO base station antenna system of either Claim 9 or Claim 10, wherein each sub-column includes exactly two radiating elements or exactly one radiating element.

12. The massive MIMO base station antenna system of any one of Claims 9 to 11,
wherein each sub-column includes exactly three radiating elements, and
wherein the antenna array has eight columns and four rows of the sub-columns.

13. The massive MIMO base station antenna system of any one of Claims 9 to 12, wherein a sub-array of the antenna array includes eight of the sub-columns, and/or wherein the coupling circuit comprises a phase shifter.

14. A base station antenna system comprising:
a beamforming radio having a plurality of radio signal ports; and
an antenna array having a plurality of rows and a plurality of columns of radiating elements,
wherein each of the radio signal ports is coupled to at least two of the columns and no more than half of the rows.

15. The base station antenna system of Claim 14,
wherein each of the rows is coupled to four of the radio signal ports per polarization, and
wherein each of the columns comprises four sub-columns that are coupled to four of the radio signal ports, respectively, per polarization, and/or wherein each of the radio signal ports is coupled to one-quarter or one-third of the rows.
